# EUROPEAN PATENT SPECIFICATION

(11) **EP 1 021 866 B1**
(45) Date of publication and mention of the grant of the patent: **23.10.2002**
(21) Application number: 98925858.7
(22) Date of filing: 08.06.1998
(51) Int. Cl.: H04B 3/54

(54) **DATA TRANSMISSION OVER A POWER LINE COMMUNICATIONS SYSTEM**
DATENÜBERTRAGUNG ÜBER NETZLEITUNGSÜBERTRAGUNGSYSTEM
TRANSMISSION DE DONNEES SUR UN SYSTEME DE COMMUNICATIONS SUR LIGNES ELECTRIQUES

(30) Priority: 10.06.1997 US 871930; 11.07.1997 GB 9714659; 17.03.1998 GB 9805765
(43) Date of publication of application: 26.07.2000
(73) Proprietor: Nortel Networks Limited, Montreal, Quebec H2Y 3Y4 (CA)
(72) Inventor: RICKARD, Robin, Paul, Hertfordshire CM23 4DN (GB); WAINMAN, Philip, Athelstan, Old Harlow Essex CM17 0JT (GB); WINSOR, Andrew, Paul, Elsenham Hertfordshire CM22 6DP (GB); WILLIAMS, Roy, Leslie, Hertfordshire CM23 3NQ (GB); DANIELLS, Martin, Brent, Chelmsford Essex CM2 6UG (GB)
(74) Representative: Bewley, Ewan Stuart
(86) International application number: GB9801667
(87) International publication number: WO98057440

(56) References cited:
- EP-A- 0 397 535
- WO-A-94/03002
- WO-A-95/19070
- WO-A-95/29537
- WO-A-96/31009
- US-A- 4 715 045
- US-A- 5 245 633

## Description

### TECHNICAL FIELD

This invention relates to transmission of data over a power line.

### BACKGROUND OF THE INVENTION

It is known to transport telecommunications signals over an electricity distribution or power transmission network. Delivering a telecommunications service in this manner is attractive as it avoids the need to install new cabling to each subscriber. By using existing electricity distribution cabling to carry telecommunications signals, significant cost savings are possible. International Patent Application WO94/09572 shows an electricity distribution network which carries telecommunications signals.

There are essentially two known methods for transmitting data over power lines. A first method uses the power signal itself, modifying the shape of the power signal at certain known points in response to the data which is to be carried. An example of this is shown in UK Patent GB 1,600,056. A second method uses a carrier signal having a different frequency from that of the power signal, the carrier signal being modulated by the data.

One of the problems with using power lines as a communications medium is that they are subject to noise and interference. A first type of noise is due to cables picking up radio signals such as broadcast AM radio signals and amateur radio band transmissions. Overhead cables are particularly prone to this type of noise. A second type of electrical noise is due to electrical equipment coupled to the power lines. Electric motors, thermostats and gas discharge lighting are particularly prone to generating noise. Noise propagates along the power lines and combines with communications signals. The level of noise can be high enough, and persist for long enough, to corrupt communications signals.

Noise can impose constraints when using the power line to carry data. The aformentioned patent application WO94/09572 shows an electricity distribution network which carries telecommunications signals and teaches that the amount of noise entering the network from the premises can be reduced by installing conditioning elements at each premises. This requires a considerable amount of work and expense.

Power line transmission is one of several ways for delivering communications to subscriber premises and is therefore sensitive to competition with existing copper wires and more recent alternatives such as optical fibre/coaxial cable delivery and fixed radio access techniques. Therefore, there is a desire to provide a system that is capable of delivering an acceptable quality of service at a cost that is attractive to a subscriber. One of the aspects of a power line transmission system that is particularly sensitive to cost is the customer premises equipment (CPE). The customer premises equipment must be capable of delivering an acceptable quality of service and interfacing to equipment in a subscriber's premises.

### SUMMARY OF THE INVENTION

The present invention seeks to minimise or overcome the above problems, and other problems which will become apparent from the following description.

A first aspect of the invention provides a method of processing a received data signal at a power line communications receiver comprising:
- filtering the received data signal through a band-pass filter centred on the frequency band used by the data signal and having a response which minimises inter-symbol interference in the data signal;
- filtering the received data signal through a narrow-band filter centred on the frequency band used by the data signal and deriving a RSSI signal; and,
- gating the filtered data signal according to the RSSI signal.

Advantageously the data signal comprises a frequency-shift keyed signal and wherein the narrow-band filter is centred on one of the FSK frequencies. The data signal can be coded such that each data symbol contains a burst at the FSK frequency upon which the narrow band filter is centred.

Preferably the band-pass filter is a maximally-flat filter.

A second aspect of the invention provides a method of transmitting data over a power line communications system comprising:
- forming a data packet having a portion of user data and a tail portion of redundant data;
- transmitting the data packet over the power line;
- receiving the data packet at a receiver of the system;
- deriving a RSSI signal from the received signal;
- delaying the received data signal with respect to the RSSI signal; and,
- gating the delayed received data according to the RSSI signal whereby the gate turns off during the period occupied by the redundant data.

The term 'noise' is intended to cover a wide range of unwanted signals, including sparking noise, impulsive noise, noise transients and interference signals.

The data that is carried in this system can be used for computer applications such as home working, file transfer, internet access and a wide range of other applications.

### BRIEF DESCRIPTION OF THE DRAWINGS

For a better understanding of the invention, and to show by way of example how it may be carried into effect, embodiments will now be described with reference to the accompanying drawings, in which:
Figure 1 shows a system for communicating over a power line;
Figure 2 shows a power line communications network which couples to the system shown in figure 1;
Figure 3 shows equipment at a subscriber's premises;
Figure 4 shows a communications base station;
Figure 5 shows typical background noise on a power line of the type shown in figure 1;
Figure 6 shows a typical impulsive noise spectrum;
Figure 7 shows probability of impulsuve noise occurring on a power line;
Figure 8 shows typical duration of impulsive noise bursts;
Figure 9 shows a further example of impulsive noise on a power line;
Figure 10 shows a power line communications system using a token bus protocol;
Figure 11 shows the effect of a branched power line on a token passing signal;
Figure 12 shows the effect of a multi-phase power line on a token passing signal;
Figure 13 shows the operation of a first form of the token bus protocol;
Figure 14 shows a base station architecture for use in the systems of figure 10;
Figure 15 shows the operation of a second form of the token bus protocol;
Figure 16 shows the effect of a branched power line on a collison sensing signal;
Figure 17 shows the effect of a multi-phase power line on a collison sensing signal;
Figure 18 shows an example warning signal;
Figure 19 shows a subscriber equipment for accessing a power line;
Figure 20 shows a base station equipment for generating a warning signal;
Figure 21 is a timing diagram to show the operation of the warning mechanism;
Figure 22 shows a polling protocol for use in a power line communications system;
Figure 23 shows the layers of a power line communications protocol;
Figure 24 shows subscriber equipment for use in the system of figure 1;

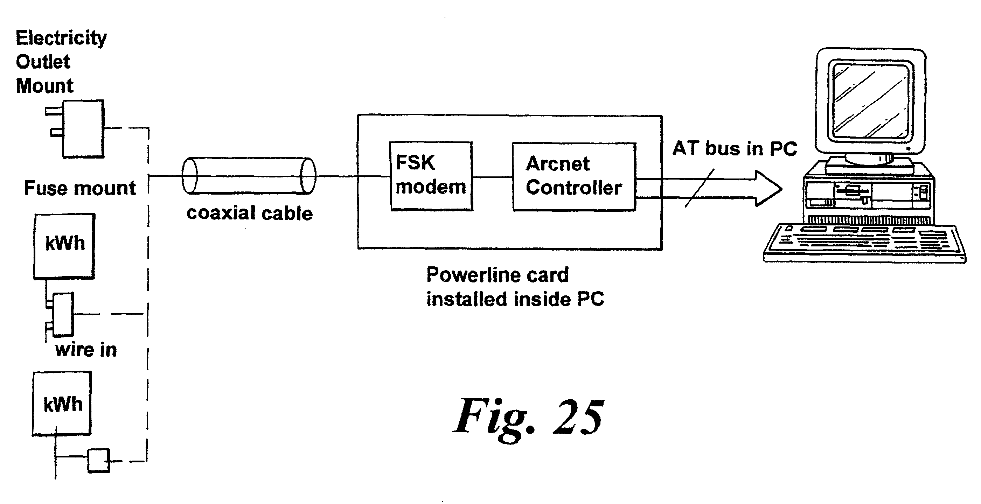

Figure 25 shows a first form of subscriber equipment in more detail;
Figure 26 shows a second form of subscriber equipment in more detail;
Figure 27 shows a physical layout for the subscriber equipment;
Figures 28 and 29 show functional parts of the subscriber equipment;
Figure 30 shows a receiver for use in the subscriber equipment;

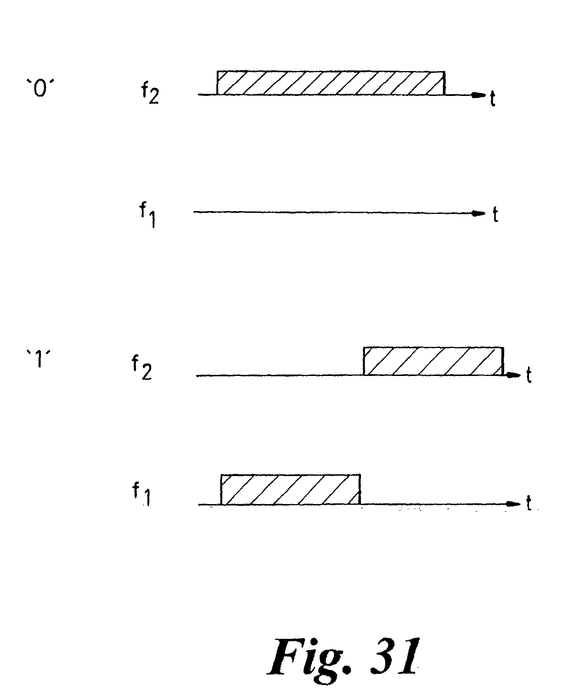

Figure 31 shows a coding scheme for transmitting data;
Figures 32 and 33 illustrate operation of the receiver of figure 30;
Figures 34A and 34B respectively show mains signal voltage and one example of noise power on one phase line of the system of figure 1 over a time period;
Figures 35A and 35B respectively show mains signal voltage and another example of noise power on one phase line of the system of figure 1 over a time period;
Figure 36 shows an example of asymmetrically transmitting a data packet about a zero-crossing point;
Figure 37 shows an example of calculating the timing of quiet periods, based on zero-crossing points;
Figure 38A shows three mains phase signals and figures 38B, 38C, 38D show noise powers on each of the phase lines over a time period;
Figure 39A shows an example of a data packet and figure 39B shows an example of transmitting a downstream packet and an upstream packet together during a quiet period;
Figure 40 shows the base station of figure 1 in more detail;
Figure 41 shows an alternative form of the base station of figure 40;
Figure 42 shows a method of operating the power line communications system using the base station of figure 41;
Figure 43 shows one example of a scheme for allocating subscribers access to the distribution cable.

### DESCRIPTION OF PREFERRED EMBODIMENTS

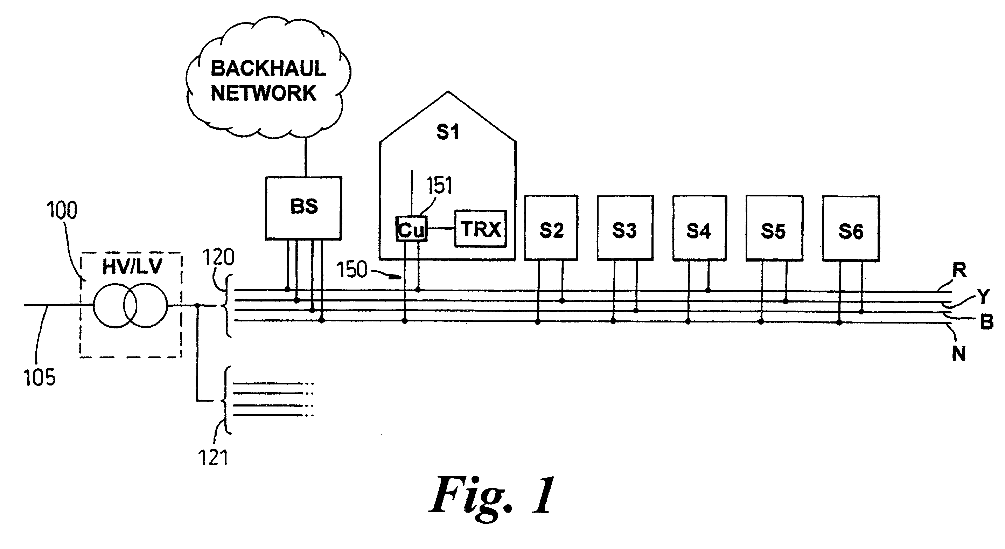

Figure 1 shows an electricity distribution network which is adapted to carry telecommunications signals. Mains electricity enters the network from an 11kV or 6.6kV transmission line 105 and is transformed by substation 100 into a 400V supply which is delivered over distribution cable 120 to customer premises S1 to S6. A substation 100 typically has between 4 and 8 distribution cables of the kind shown as 120, 121 leading from it, each distribution cable serving a number of premises. A distribution cable can extend for several hundreds of metres. Distribution cable 120 comprises blue, red and yellow phase lines and a neutral line. Subscriber communications stations TRX are typically located at houses or businesses. A full system will usually include more than the six premises shown here and will typically include a more elaborate tree-and-branch distribution network. Subscriber premises may receive a single phase electricity supply (230V) or a three-phase electricity supply (400V). Domestic subscriber premises usually receive a single phase supply and neighbouring subscriber premises are usually coupled to different phase lines. In figure 1 subscriber S1 is shown coupled to the red phase line, and subscriber S2 is coupled to the yellow phase line. This helps to distribute the load of the network evenly across the three phases.

A base station BS couples data communications signals onto distribution cable 120. The base station can be coupled to one or more distribution cables 120 at a point near to substation 100, as shown in figure 1, or it may be coupled to the bus bars at substation 100, the bus bars acting as a star point for serving all of the distribution cables. The communications signals propagate over the cable to transceiver stations at subscriber premises S1 to S6, with a coupling unit CU 151 coupling the communications signals to/from the power line. Subscriber premises couple to a phase line of distribution cable 120 by a branch line 150. In the upstream direction, communications signals are transmitted from the subscriber transceiver stations towards the base station. Communications signals are preferably transmitted between a phase line and neutral or earth.

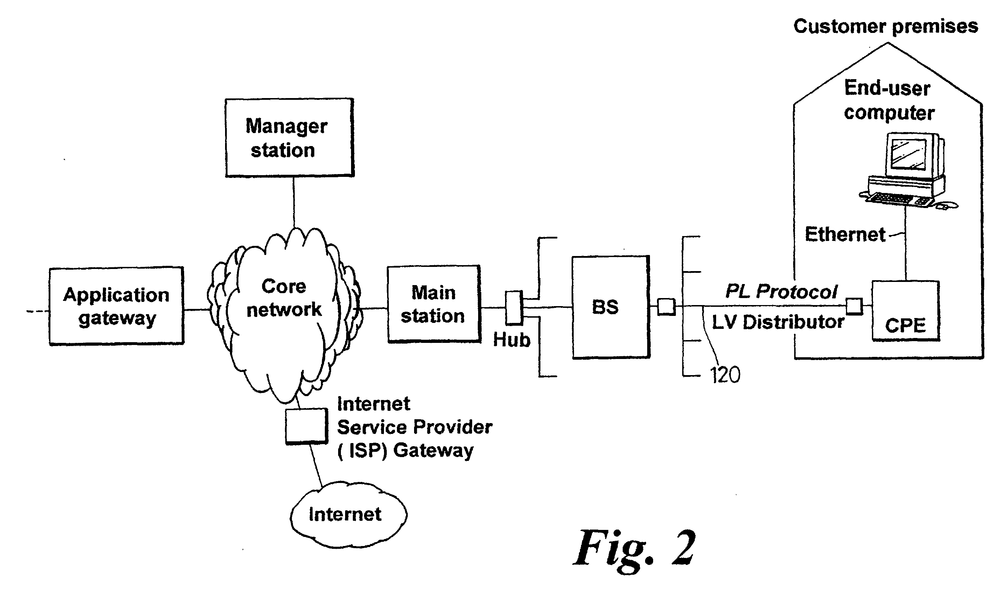

Figure 2 shows a top level diagram of an example power line communications (PL) system configuration. The end-user computer connects to the customer premises equipment (CPE), within the customer premises. The CPE is connected to the power line base station using the power line protocol across the low-voltage LV power line. Communications traffic from multiple base stations accesses the core network through the main station via concentration in a hub, FDDI ring or Ethernet daisy chain. Within the core network a manager station allows remote management of the base stations and CPEs. Intranet and Internet access is available directly or indirectly via the core network, via gateways where appropriate.

The backhaul network may be directly connected to the Base station trunk, or through a high speed link utilising radio, fibre or copper between the Base station and a node of either the Internet Service Provider (ISP) or alternative operator. Various options exist for backhaul including fixed radio links, fibre, copper or SDH. The preferred option is the use of fibre when the base station Ethernet port can be attached to a small converter to provide 10BaseF connectivity. Commercial links providing an E1 2Mbps capacity are acceptable. A ring structure is preferred and can be provided by Ethernet daisy chaining, SDH or FDDI technology.

The central switching facilities provide trunk access to Internet service Providers (ISPs) or corporate data networks (Intranets).

The main station is a switch such as a Northern Telecom MAGELLAN PASSPORT Model 160 which performs a number of functions including interfacing the base station LANs to the core SDH network. With a capacity of 1.6Gb/s it can support more than 1000 base stations.

### Customer Premises

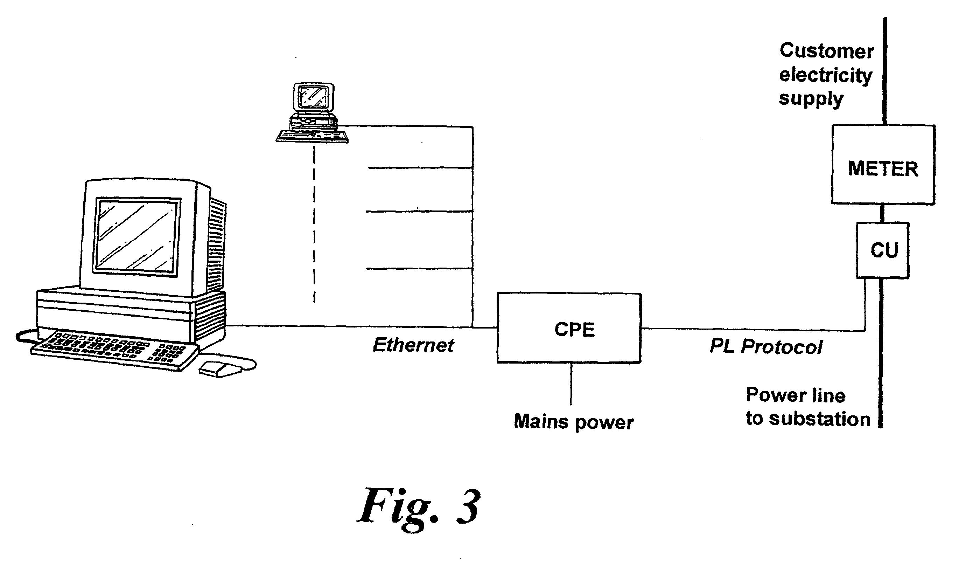

An example customer premises installation is shown in figure 3. The CPE is a free-standing unit, powered from the customer premises mains supply. The CPE provides two data connections:
- A 10BaseT Ethernet connection (to the customer computer).
   - A coaxial connection to the power line coupling unit CU.

The coupling unit provides the link between the CPE and the external power line. Preferably this is at the street side of the electricity meter.

The CPE need not be located close to the customer's computer. For ease of installation within the customer premises, the Ethernet link is preferably via unshielded twisted-pair (UTP) cable. A number of data terminals can connect to the CPE in the form of a local area network, as shown in figure 3. The CPE is intended to be left powered up continuously, i.e. it does not need to be turned on and off at the same time as the computer.

### Data Transmission

Two frequency bands, referred to as PLT1 and PLT2, are used for power line transmission. These bands are 2.2-3.5 MHz and 4.2-5.8 MHz respectively. The upper and lower limits on each band are defined to avoid interference to (and from) other RF users, in particular medium wave, radio amateurs and short wave radios. The base station supports transmission and reception at both PLT1 and PLT2, providing frequency diversity to overcome any frequency-specific reception difficulties associated with an individual CPE. CPEs can use a, tuneable modem to operate on the two bands.

Frequency shift keying (FSK) is preferred as a modulation scheme. The special case of minimum shift keying (MSK) and more spectrally-efficient modulation schemes such as QAM can also be used, although these require a higher carrier-to-noise ratio (CNR) and will hence reduce the achievable range for a given transmitter power limit. As described below, subscribers located closer to a base station may use the more spectrally-efficient schemes as they will experience a higher SNR.

The PL system delivers around 1 Mbps peak bit rate, shared between all CPEs connected to a given Base station. This peak shared bit rate may be reduced, such as to 250kbps or 500kbps, or raised depending on available bandwidth and modulation schemes that are used. Reduced bit rates will also be supported to provide service to end-users at the extremes of the system range and end-users with adverse link transmission characteristics.

To compensate for difficult CPE-Base station links (e.g. CPEs at the extremes of transmission range) one or more reduced bit rates can be used.

The bit rate and frequency band for the CPE can be set via control signals from a network management unit.

The range over which a PL link can be reliably maintained is dependent on the loss characteristics of the electricity distribution cable and the noise levels experienced at the receiver. For reliable operation, it is expected that a carrier to (background) noise ratio (CNR) of greater than 10 dB is required.

The use of multiple frequency bands and multiple data rates allows individual CPEs to be configured to best match the transmission characteristics to the customer premises. Where appropriate, such parameters will be capable of being configured across the network from the management system. The base station supports the same frequency bands and data rates as the CPEs connected to it. When communicating with any CPE, the Base station will automatically switch to the frequency and data rate used by that CPE.

### Base station

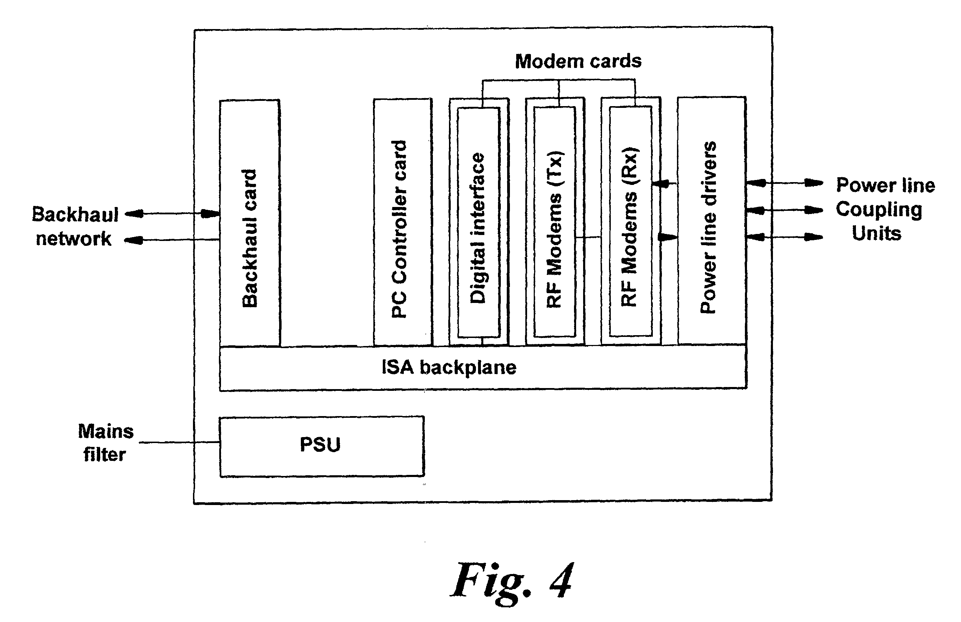

Figure 4 shows, an example of equipment provided at base station BS. Communications signals at RF are received from power line coupling units at the power line drivers. These signals are fed to RF modems which convert the RF signals to base band. The digital interface manages the protocol and performs conversion of the power line packets into a format for transmission over the backhaul network.

The interface provided by the base station to the backhaul network can be 10BaseF, E1 and FDDI. The backhaul may vary between installations, as required to provide an economic backhaul solution to the central head-end switch.

The noise environment on the power line consists of background noise, which is constantly present, comprising mostly broadcast radio carriers; and additionally impulsive noise. The vast majority of impulsive noise bursts are short in duration and will result in the loss of a single packet, which will be resent with minimum impact on the throughput rate available to the user. However, there is a finite probability of more sustained noise bursts lasting up to several seconds in duration. These may, for example, be caused by faulty central heating thermostats. These bursts will interrupt all traffic on the power line for several seconds. In the worst case, these have been found to occur up to five times per hour. There is no way to prevent this interruption, except to replace the faulty electrical equipment which is considered uneconomic. However, the PL system will be designed such that the interruptions caused to the service by the noise bursts is kept to a minimum and recovery of service after a burst is immediate

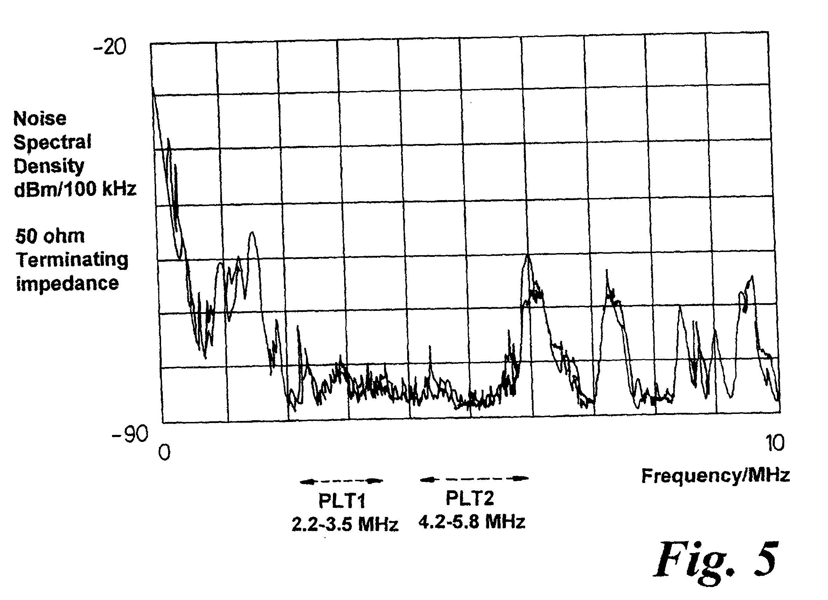

Figure 5 shows typical background noise on an underground power line across the frequency band 0-10MHz. It has been found to be particularly advantageous to transmit communications signals within the frequency bands 2.2 - 3.5MHz (PLT1) and 4.2 - 5.8MHz (PLT2). These bands fall between the medium wave and short wave bands used for broadcast radio transmissions and avoid the radio amateur band at 3.5 - 3.8 MHz. There is a reduced level of background noise in these bands and the radiation of power line communications signals in this frequency band causes minimum interference with radio receiver equipment at subscriber premises. Other frequency bands in the range of, for example, 2-30MHz can be used although it is preferred to use the lower frequencies because attenuation over the distribution cables is lower.

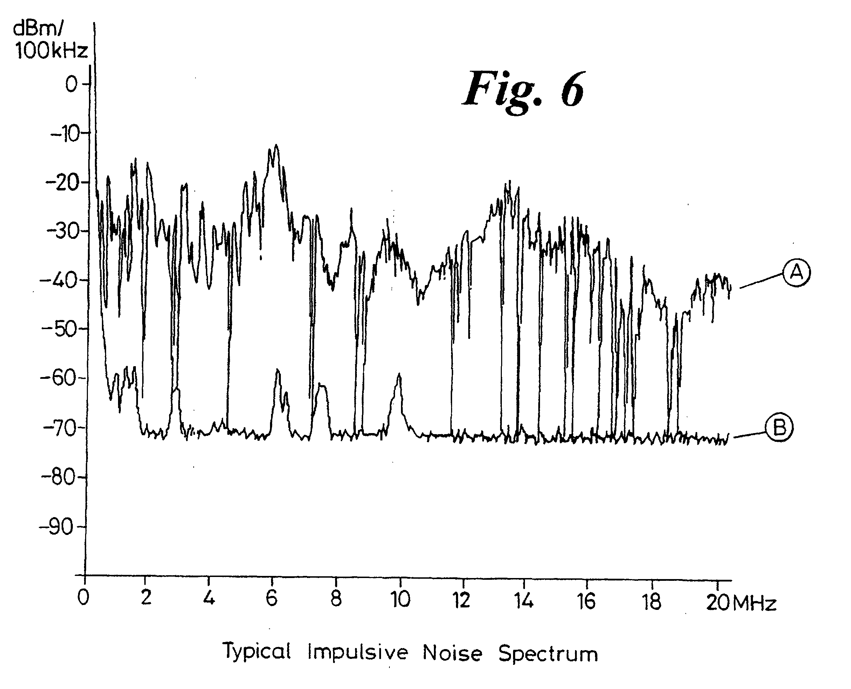

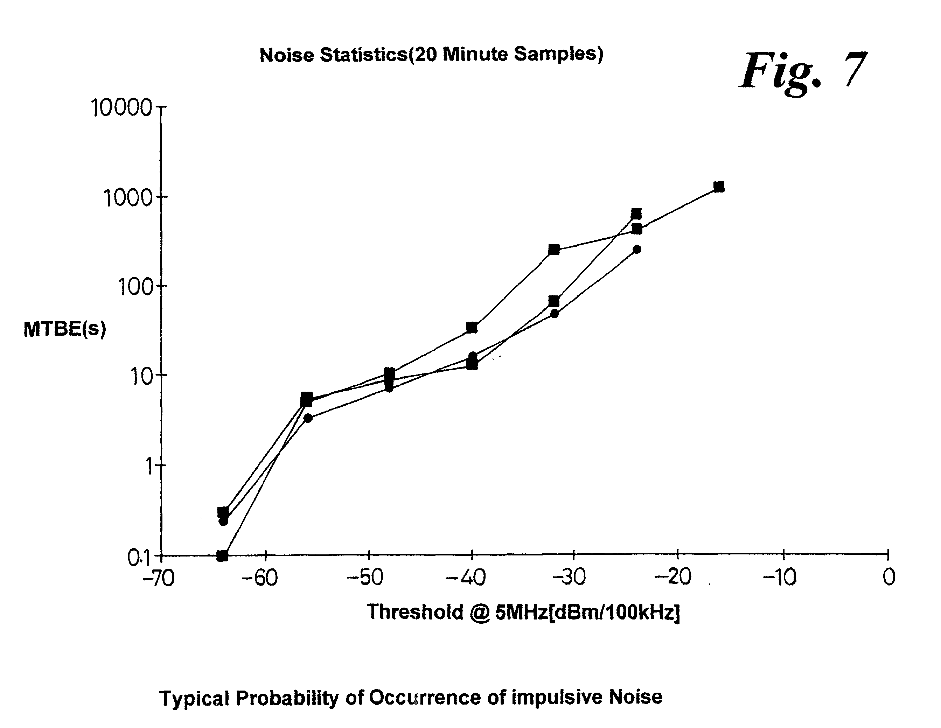

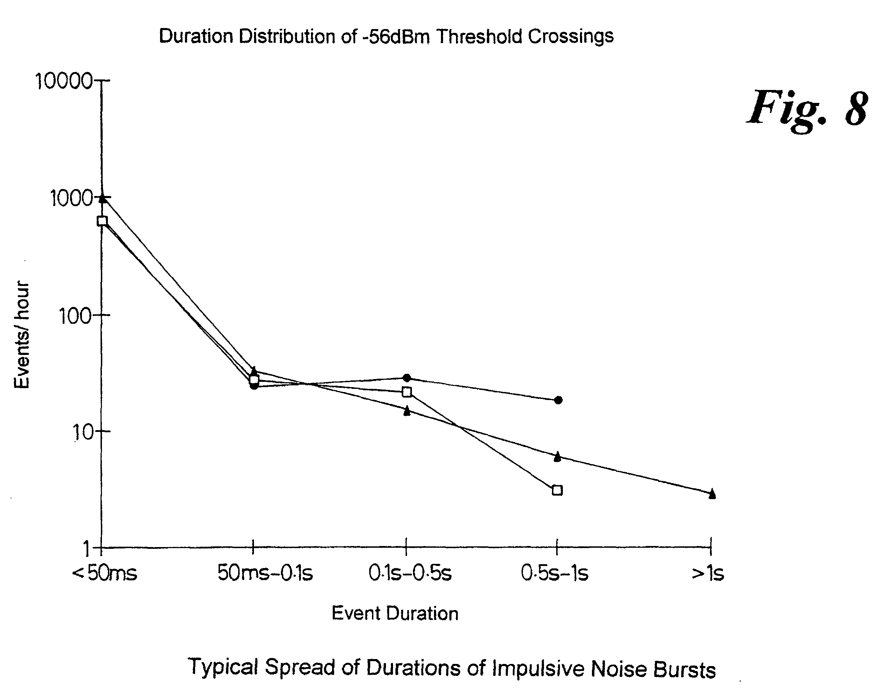

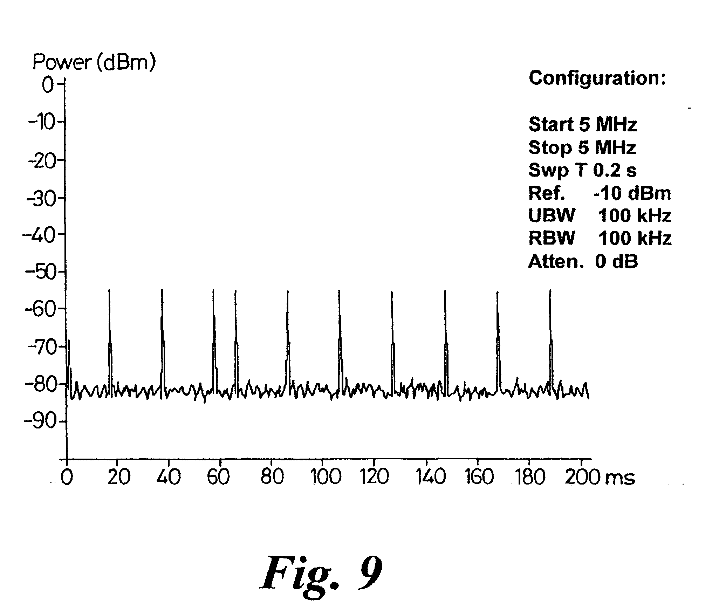

In addition to background noise there is impulsive noise which is caused predominantly by sparking (e.g. faulty thermostats.) This has a broad, fairly flat spectrum. Figure 6 shows two spectrum plots (A), (B) of impulsive noise taken at different times. Figure 7 shows the probability of impulsive noise occurring at various power threshold levels, and figure 8 shows the duration of those impulsive noise bursts which cross the -56dBm power threshold at which applicant operates. The majority of noise bursts crossing the threshold are <1 ms in length. For reliable operation, it is necessary to maintain a carrier to noise ratio of at least 10dB. Occasional noise spikes above this level can be tolerated providing that the mean time between noise events is significantly greater than the duration of a transmission packet. Figure 9 shows another example of impulsive noise that can occur on a power distribution network. This consists of short spikes with a short duty cycle. A short packet length of around 5ms, and preferably 2-5ms, has been found to offer good performance as the short length statistically has a high probability of fitting between high-level impulsive noise bursts.

Data can be transmitted using a variety of line coding or modulation techniques. Applicant uses Frequency Shift Keying (FSK) modulation about a centre-frequency of 2.9MHz for the frequency band PLT1. The upstream and downstream transmissions preferably share a common frequency band with the upstream and downstream transmissions occupying different times.

The range over which the link can be reliably maintained is dependent on the loss characteristics of the electricity distribution cable and the noise levels.

Referring again to figure 1, it can be seen that stations S1 to S6 are sited at increasingly greater distances from the base station. Signals transmitted to/from a station sited close to the base station, such as station S1, should be attenuated less than the signals transmitted to/from a station sited further away from the base station, such as station S6.

The factors affecting CNR of a signal received at a station are:
(i) attenuation for the path between the transmitting and receiving stations; and,
(ii) noise level on the power line.
This generally corresponds to an increasing carrier to noise ratio (CNR) for stations sited progressively closer to the base station.

It is possible to take advantage of this effect by transmitting data at a higher bit rate to those stations sited closer to the base station. This results in an improved data throughput for the system. The transmitted bit rate can be varied by varying the modulation scheme so as to use a more spectrally-efficient modulation scheme (such as high order QAM) for those stations sited closer to the base station and a less spectrally-efficient modulation scheme (such as lower order QAM or FSK) for stations sited further away from the base station.

The coding scheme that is used can be changed to improve reliability of transmission to stations that experience a poor communications path. Suitable schemes are NRZI-Space encoding for regular transmissions and Biphase-Space encoding for stations that require a more robust scheme. The biphase scheme includes more clocking information for a more reliable data transfer, but at the expense of a halved data rate.

Path attenuation remains fairly constant for the path between a particular pair of stations. A measurement can be made at the time of installation, such as by manual measurement and stored at the base station for reference. Noise level on the line, the other factor which determines CNR, can vary according to the time of day. Periodic measurements can be made by the base station of noise level on the power line. A general measurement of noise level can be made for use by all transmissions, or a signal quality metric can be derived for a particular station, based on the bit error rate of a data transmission from that station, or a measurement of CNR/SNR.

The bit rate or modulation scheme used by a particular pair of stations (e.g. base station to station S3) can be fixed and known by the pair of stations, or it can be varied according to the line conditions. For the adaptive case, signalling between the pair of stations establishes the modulation scheme that is used.

The bit rate can be chosen from a number of supported rates, such as 250kbps, 500kbps, 1Mbps.

Referring again to figure 5, two different frequency bands are provided for power line communications. The frequency band that a particular station uses (PLT1 or PLT2) can be selected to provide an optimum communications link. Different stations (on the same or different power lines served by the base station) may require different frequency bands due to the particular noise/interference conditions on the path to that subscriber. Providing a selection of both frequency bands and data rates allows each subscriber station served by a base station to reliably operate at as high a bit rate as possible. While two frequency bands are shown here, it is also possible to provide a larger number of frequency bands.

A variety of conventional local area network protocols can be used on the network. The typical peak data rate of the system is in the region of 0.5 - 2Mbit/s. Use of three local area network transmission protocols - token bus, carrier sense multiple access (CSMA) and polling will now be described in some detail.

### Token bus

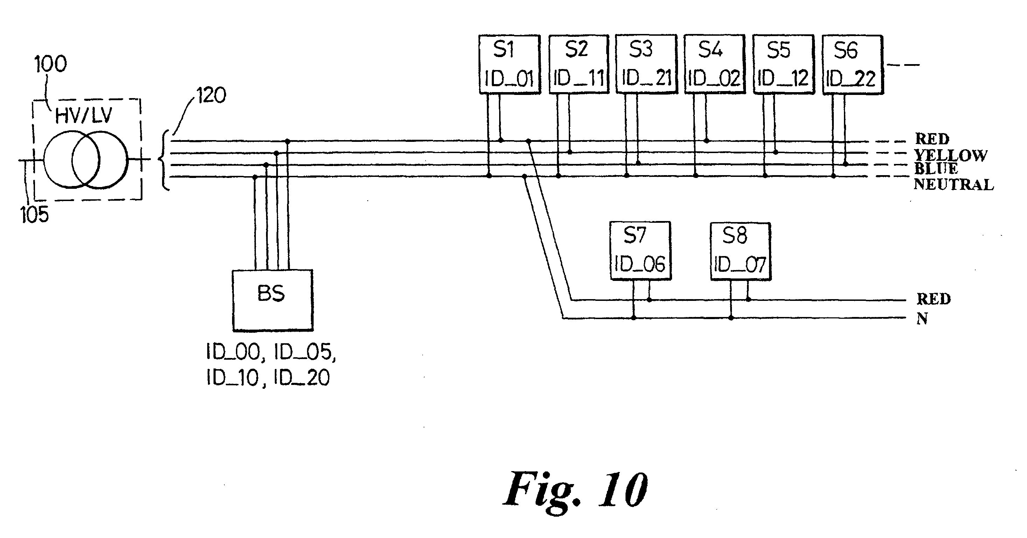

Use of the token bus packet data protocol on a power line communications network will now be described with reference to figures 10 to 15. Referring first to figure 10, applicant uses a modified form of the ANSI 878.1 (Arcnet) token bus protocol in which each subscriber station S1, S2, S3... is treated as a node in the network and has a unique ID number. For example, station S1 has ID_01 and station S2 has ID_11. At any particular time, one subscriber station - the station holding the "token" - has access to the communications medium. Upon completion of that station's communication the token is passed to the subscriber station having the next highest ID number on the network. For example, once subscriber station S2 (ID_11) has completed transmitting, the token is passed to station S5 (ID_12).

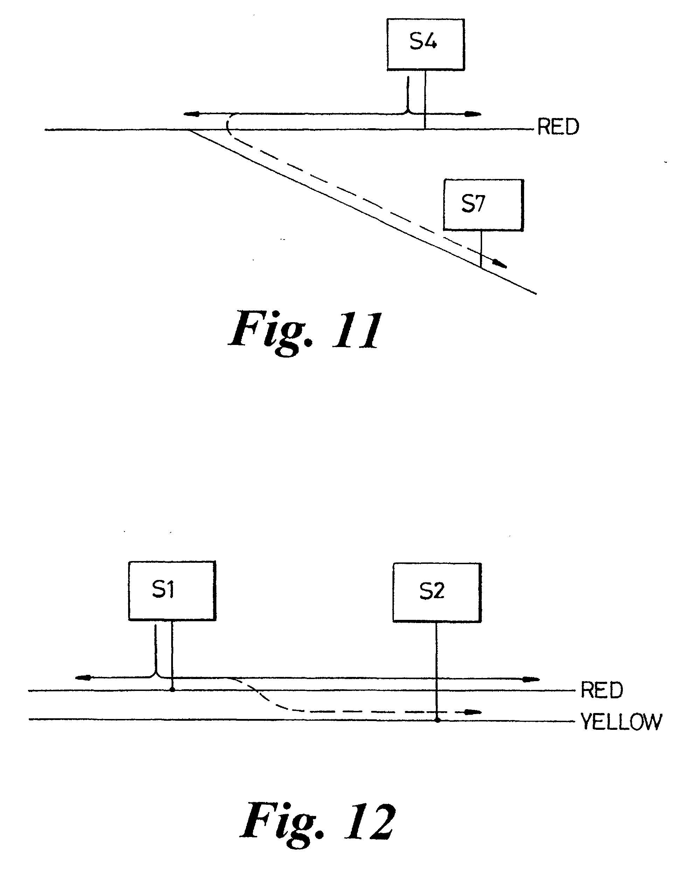

An electricity distribution network typically has three phase lines red, yellow, blue. The coupling of signals between these phase lines is variable, and cannot be relied upon. Coupling between phase lines varies with frequency of transmission, distance between stations and electrical and other characteristics of the power line. The distribution network also typically has a branched layout. With reference to figure 11, subscriber stations S4 and S7 are connected to different branches of the distributor. When station S4 on one branch transmits a token-passing signal towards station S7 on another branch the signal experiences considerable attenuation, e.g. 80 dB. The attenuation can be great enough to prevent station S7 from receiving the token-passing signal from station S4. Losing the token in this way results in a time period during which the communications medium is unused, thereby reducing data throughput. A similar effect occurs when two stations are widely spaced apart such that the attenuation of the path between them reduces the level of the transmitted signal to such a low level that it cannot be detected.

Figure 12 illustrates the situation where two stations are connected to different phase lines; station S1 to the red line and station S2 to the yellow line. When station S1 on the red line transmits a token-passing signal towards station S2 the signal is unreliably coupled between the red and yellow phase lines, resulting in a weak signal reaching station S2. The signal can be too weak to be received by station S2.

To prevent this situation, the protocol is arranged such that stations on different branches, and stations on different phase lines do not pass a token directly to one another. Instead, the token is first passed to the base station, and then passed to the node which is connected to the different branch or phase line.

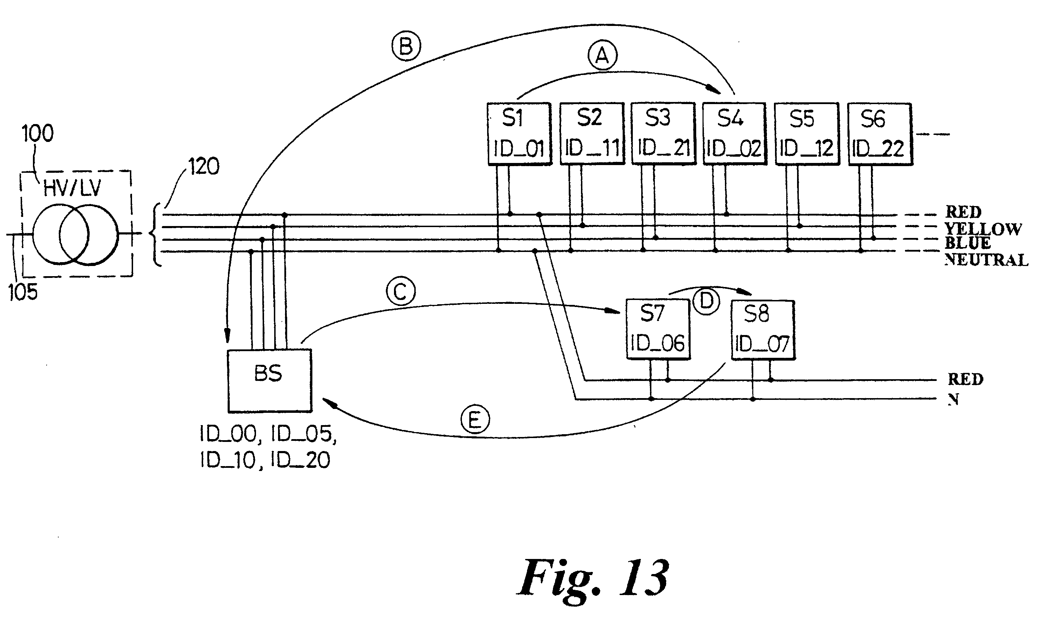

A first way of implementing this is illustrated with reference to figure 13:
Step (A): Station S1 (ID_01) on the red phase line, on completing its transmission, passes the token to station S4 (ID_02) which is also on the red phase line.
Step (B): Station S4 (ID_02) passes the token to the base station BS (ID_05).
Step (C): Base station passes the token to station S7 (ID_06) on the branched section of the red phase line.
Step (D): Station S7 (ID_06) passes the token to station S8 (ID_07) which is also on the branched section of the red phase line.
Step (E): Station S8 (ID_07) passes the token to the base station BS(ID_10).
Step (F): Base station passes the token to station S2 (ID_11) on the yellow phase line.

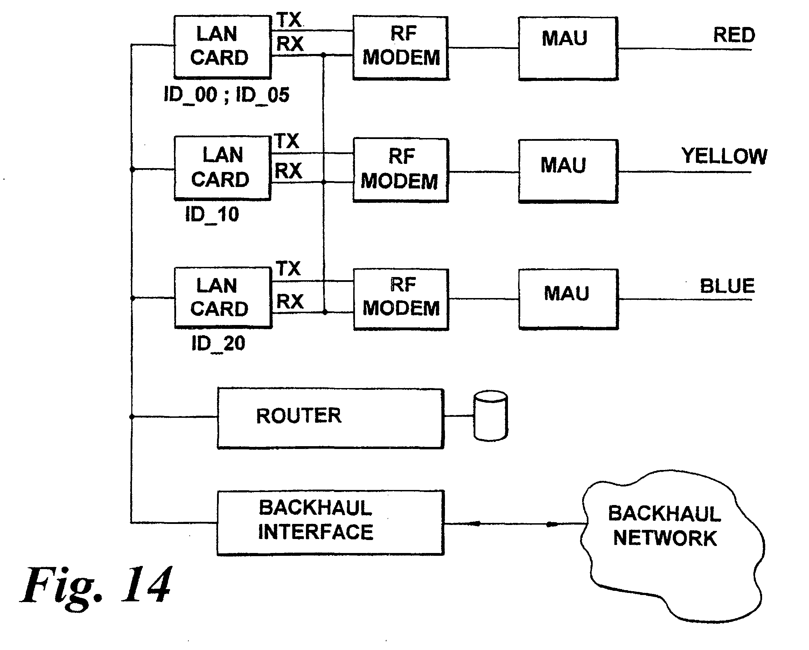

Figure 14 shows, one form of architecture for the base station equipment. It is preferred to use one LAN card, one RF modem and one medium adapter unit (MAU) for each of the three phase lines red, yellow, blue as this offers improved performance over using a single RF modem for all three phase lines. Each medium adapter unit includes amplifiers for the upstream/downstream path. Each RF modem performs conversion between digital data at baseband and RF modulated (FSK) data for transmission over the power line. Each LAN card processes data into packet form and manages transmission of the packet according to the particular protocol in operation i.e. token bus/Ethernet. The addresses shown for each LAN card are for the example just described above; it is of course possible to assign different addresses, and different numbers of addresses to these cards as required. In order to allow a token to be passed from a subscriber station on one phase e.g. red, to a subscriber station on another phase line e.g. yellow, the received data from every RF modem is applied to the input of every LAN card. As an example, when station S4 has completed its transmission it passes the token to LAN card (ID_10) responsible for the yellow phase line. The transmission from station S4 is decoded at RF modem.. and coupled to the input of LAN card (ID_10). This LAN card then continues passing the token between stations coupled to the yellow phase line. Similarly, when all of the stations on the yellow line have completed their transmissions, the token is passed to the LAN card (ID_20) responsible for the blue phase line, and the token is then passed between stations connected to the blue phase line.

The base station is coupled to an external data communications network, which uses a protocol such as X.25, Frame Relay or Ethernet, via a backhaul interface module. A router module routes data packets between the external communications line and the appropriate LAN card. The router can be a PC running Novell Netware™ software. Data packets for stations will contain a global IP address; the router uses a database to convert the IP address into a local address by which the station is known on the power line network, and hence correctly deliver the packet.

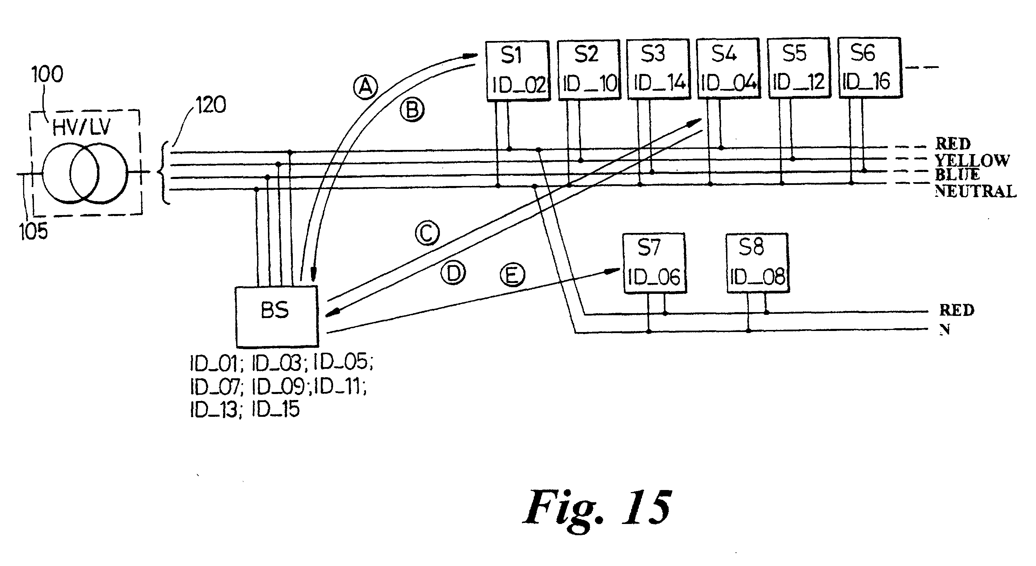

A second way of implementing token bus involves passing the token from the base station to a subscriber station and then back to the base station before passing it to the next subscriber station. This can be achieved by assigning addresses to the stations such that every other address (e.g. every odd address) is given to the base station. This is illustrated with reference to figure 15:
Step (A): Base station (ID_01) transmits any data for a station and then passes the token to station S1 on the red phase line.
Step (B): Station S1 (ID_02) transmits data to another subscriber station or, most probably, to the base station before passing the token back to the base station BS (ID_03).
Step (C): Base station (ID_03) transmits data for a station and then passes the token to station S4 (ID_04) on the red phase line.
Step (D): Station S4 (ID_04) transmits data to another subscriber station or, most probably, to the base station before passing the token back to the base station BS (ID_05).
Step (E): Base station (ID_05) transmits data for a station and then passes the token to station S7 (ID_06) on the branched section of the red phase line.

This method allocates 50% of the time to the base station for downlink transmissions, which is an important consideration for data applications such as file downloading or internet browsing where the majority of the traffic is in the downstream direction from the internet service provider to the subscriber.

It can be seen that a station's address is an important parameter which affects performance of the network. It is preferred to store a station's address in a programmable read-only memory allowing the option of reprogramming by downloading data from a network management unit.

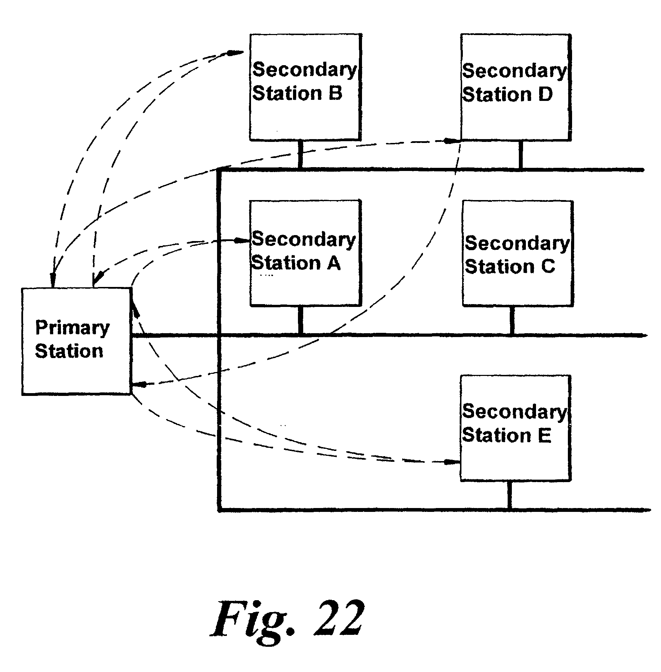

The ANSI 878.1 protocol conventionally uses amplitude shift keying (ASK) to code the data packets. However, Applicant has found that adapting the protocol to encode data using frequency shift keying (FSK) or minimum shift keying (MSK) offers better performance over a power line communications network. In particular, using FSK allows limiting amplifiers to be used and affords a better dynamic range. Applicant uses the coding scheme Inverse Return-to-zero (IRZ) as shown in figure 22. A binary 'zero' is represented by a burst of a signal at frequency f2 and a binary 'one' is represented by a short burst of a signal at frequency f1 followed by a short burst of a signal at a frequency f2.

### Carrier Sense Multiple Access (CSMA)

An alternative protocol to the token bus is carrier sense multiple access (CSMA), which may also be combined with collision detection to form (CSMA/CD). CSMA is widely used on local area networks to deliver data between computer terminals. A CSMA protocol can also be used to deliver data packets to subscriber stations coupled to a power line. For efficient operation, CSMA requires each station to be able to receive the transmissions of every other station so that a station accesses the medium only when it senses that it is not in use by another station and so that when a collision does occur it can be sensed and the transmission can be stopped to avoid wasted time. However, an electricity distribution network having several phase lines and branched sections poses a similar problem for CSMA operation to that described above for the token bus protocol. This is because a station on one branch line may not be able to receive the transmissions of a station on a different branch line and because a station on one phase line may not be able to receive the transmissions of a station on a different phase line.

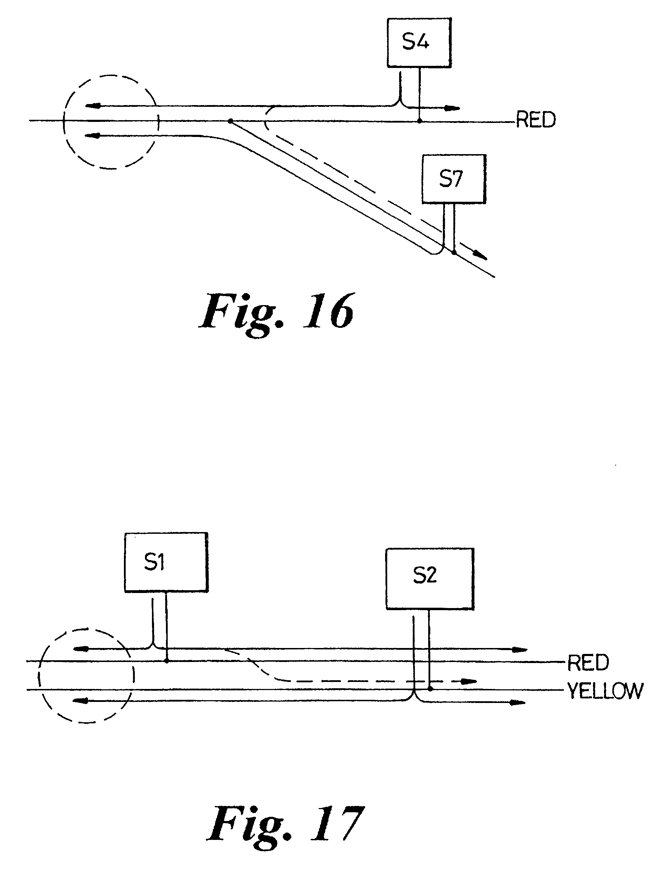

This problem will now be more fully described with reference to figure 16 where subscriber stations S4 and S7 are connected to different branches of the distributor. When station S4 on one branch transmits over the power line the transmitted signal experiences considerable attenuation, e.g. 80 dB by the time it reaches station S7 on the other branch. The attenuation can be great enough to prevent station S7 from receiving the signal from station S4. In a conventional CSMA system if station S7 also decides to access the medium at this time it senses the level of carrier signal on the line and, if the level is low enough (as it will be if S4's signal has been strongly attenuated), begins transmitting over the line. This results in a collision.

Figure 17 illustrates the situation where two stations are connected to different phase lines; station S1 to the red line and station S2 to the yellow line. When station S1 transmits on the red line the signal is unreliably coupled between the red and yellow phase lines, resulting in a weak signal reaching station S2.

If station S2 also decides to transmit at this time it senses the carrier level on the line and, if it is low enough, begins transmitting. This results in a collision.

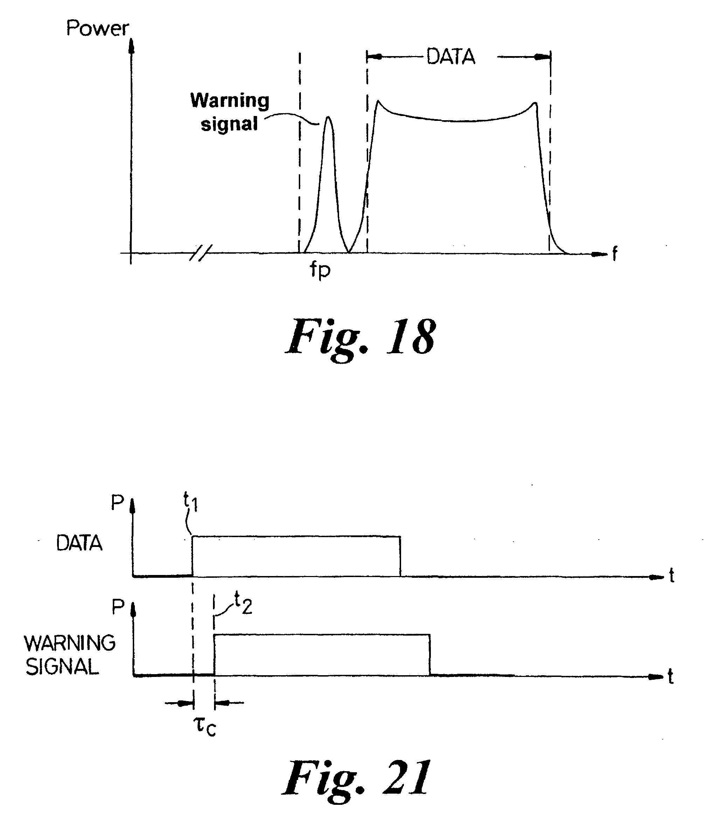

The above examples show that the conventional CSMA protocol must be adapted for use on power line systems. In adapting CSMA for use on power lines, it is preferred to choose one station whose transmissions can be received by all other stations, such as the base station, and adapt this station to apply a warning signal whenever the medium is in use. For example, station S2 transmits a packet. This is received, after a short propagation delay, by the base station. The base station then transmits a warning signal which is propagated along each of the phase lines and along each of the branches of each phase line, such that it can be received by all stations in the communication system. Each station is then aware that the medium is in use and that it should not attempt to transmit a data packet itself. Figure 18 shows one form that the warning signal could take. A part of the frequency band which is used for data packet transmission is reserved for use by the warning signal at a frequency fₚ. A pilot tone is a suitable warning signal, but other forms of signal could be used. The reserved part of the frequency band for the warning signal is conveniently chosen to lie at one end of the band used for data packet transmission.

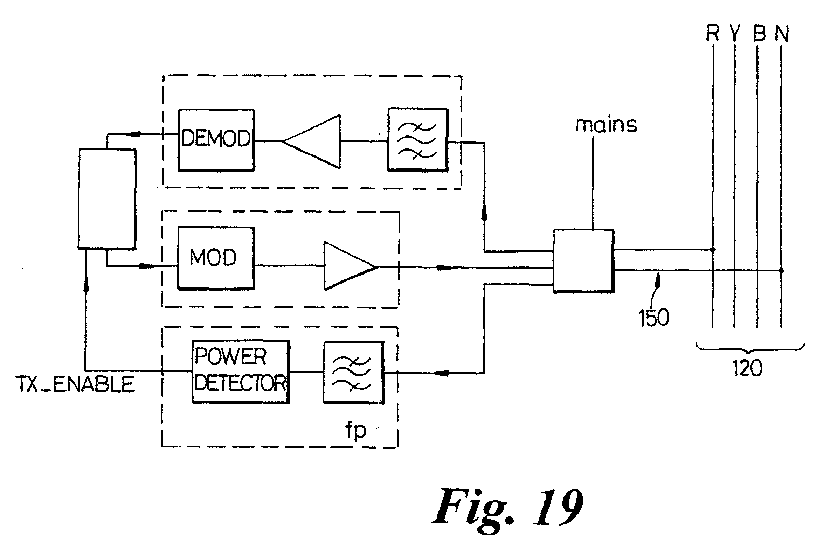

All stations in the system have a receiver which Is able to detect the warning signal. Figure 19 shows a suitable receiver arrangement. A line which carries the communication signals from the power line is tapped, and the tapped signal passes through a band pass filter whose response is centred on the frequency of the pilot tone used as the warning signal. The output of the band pass filter is applied to a power detector which produces a transmit enable signal (TX_ENABLE) that is used to enable or inhibit the station's transmitter from operating, and thus allow or prevent the station from transmitting over the power line. Subscriber stations may solely use the presence or absence of the warning signal to allow or prevent the station from transmitting. Alternatively the station may use both a warning signal detector and a carrier sensing detector as used in conventional CSMA stations to determine when to access the line.

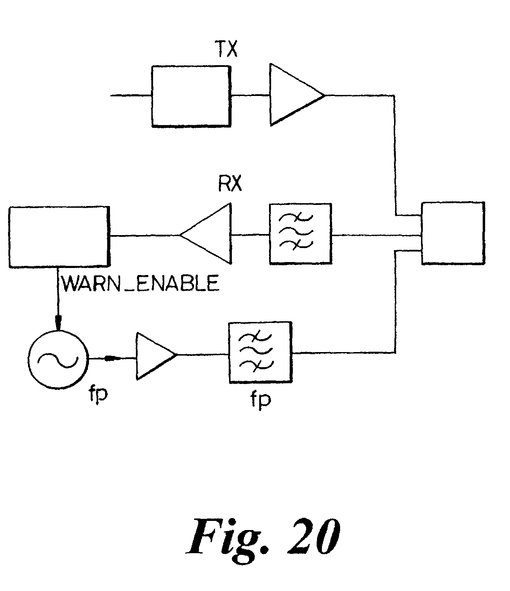

Figure 20 shows suitable equipment at the base station for generating the pilot tone. Communications signals from the power line are passed through a filter which passes frequencies about the band used to carry the data. These are then demodulated or decoded and applied to a processor. When signals are received a signal generator is enabled, which applies a pilot tone to an amplifier and a band pass filter centred on the frequency used for the pilot tone. The filtered pilot tone is then applied to the power line for transmission to each subscriber station.

Figure 21 shows a timing diagram to illustrate operation of this protocol. The upper line shows a subscriber station starting a transmission at time t1. This transmission is received by the base station, which then begins transmitting a pilot tone at time t2. There is a short time period τ_{c} between the time that the station starts transmitting data, and when the base station starts transmitting the pilot tone, when there is a risk of collisions caused by other stations beginning their data transmissions. This collision time is of a similar level to that experienced by stations which perform collision detection by monitoring the medium for another station's carrier signal.

In both the token bus and CSMA protocols a station is able to address its data packet to any particular node on the network. For communication between a station on the power line and a remote station it will be necessary to route the packet via the base station. However, one station on the power line can address its data packet directly to another station on the power line. This will be subject to the two terminals being able to receive one anothers transmissions.

### Polling

A power line network consists of a primary station (base station) and a number of secondary stations (subscriber stations) communicating over a power line system. The primary station controls access to the network by the secondary stations through the use of polling.

The primary station allocates physical station addresses to each secondary station. As the Power line protocol emulates an Ethernet LAN service each station is also uniquely identified by the use of an Ethernet address which would be fixed at manufacture.

Each secondary station on the network is registered with the primary station through the management interface, using its unique Ethernet address, before service can be provided to it.

The primary station is responsible for determining if registered secondary stations are operating in an active, degraded or inactive state. Changes in the operational state of a secondary station do not affect the normal operation of other stations.

The primary station continuously polls all active secondary stations in sequence using either information or polling frames, selecting the appropriate modem frequency and data rate as required. Secondary stations can only transfer information when they have been polled. The primary station waits for a response to its poll or moves on to the next active secondary station if a response is not received within the expected time.

Figure 22 illustrates a typical polling sequence driven by the primary station, each secondary station is shown responding to the poll, the primary station then polls the next active secondary. Secondary station C is shown in an inactive state and is not polled for the transfer of information frames.

### Protocol Layers

The power line protocol is specifically designed to support the emulation of an Ethernet compatible Local Area Network (LAN) over a power line transmission environment.

In order to provide flexibility the protocol has been defined in terms of a number of layers, each of which provides a service to the layer above using the facilities provided by the layer below.

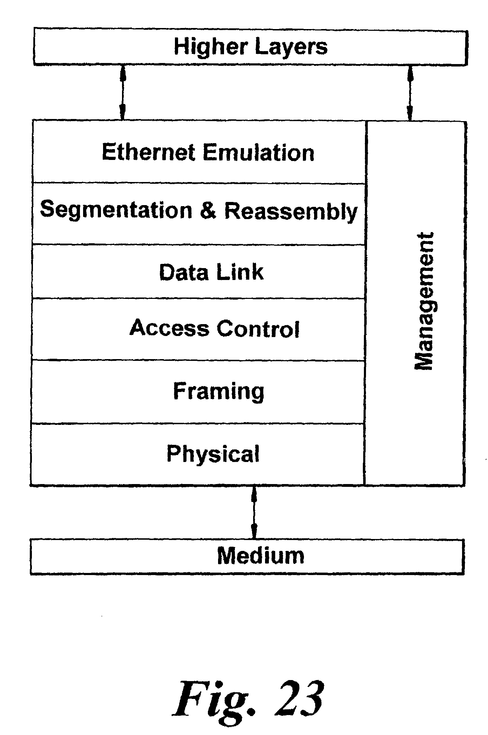

Figure 23 illustrates the functional layering of the protocol definition, each layer being described in the following subsections. The layering is not intended to imply any specific implementation approach.

### Physical

The Physical Layer interfaces between the Framing Layer and the medium, i.e. the low voltage power cabling. It provides further processing of the HDLC frames from the Framing Layer into an encoded serial bit stream which is modulated and transmitted in the appropriate frequency band on the medium. On the receive side the serial bit stream is recovered from the medium and symbol timing and data extracted.

The physical layer signal is matched to the medium using appropriate drivers and connection units to provide isolation.

### Framing

The Framing Layer uses a standard HDLC frame structure. This provides frame delimiting with data transparency, a frame check sequence for error detection and a station address field. Frames received with errors detected by the frame check sequence are discarded.

The primary station uses a fixed address, each secondary station has a station address which is unique within the scope of the primary station to which it is connected.

Received frames are filtered based on the address field using either the station or broadcast address in order to reduce processing overheads. A control field is used to differentiate between different frame types and to provide sequence numbering.

### Access Control

The Access Control Layer provides access to the medium for data transfer through the use of polling and controls the operational state of the registered secondary stations on the network.

The primary station continuously polls all active secondary stations using either information or polling frames. Secondary stations can only transfer information when they have been polled. The primary station waits for a response to the poll or moves on to the next active secondary station if one is not received within the expected time. The reliability of response of active secondary stations is noted.

The primary station monitors the state of each secondary station. It occasionally invites inactive secondary stations to join the network and sets up configuration parameters including station address.

If it is determined that contact may have been lost with a secondary station it is placed in a degraded state and polled less frequently in order to reduce the performance effects on the system. If the secondary station recovers it is returned to the active state.

If the loss of contact with the secondary station becomes prolonged it is placed in the inactive state and has to wait to be invited to rejoin the network before it can take part in information transfer.

The sequence of secondary stations joining and leaving the network is designed to not affect the operation of other active secondary stations which can continue transferring information undisturbed under primary station control.

### Data Link

The Data Link Layer provides both unnumbered and numbered information transfer services.

Unnumbered information transfer does not guarantee delivery and is normally used for broadcast messages to secondary stations. If used for normal data transfer then any error recovery becomes the responsibility of higher layers in the system.

Numbered Information transfer uses sequence numbering and retransmission of corrupted frames in order to provide reliable transmission of data between the primary and secondary stations.

### Segmentation & Reassembly

The Segmentation & Reassembly Layer provides a mapping between Ethernet and Power line protocol frame sizes.

Before Ethernet frames can be transmitted they have to be broken up into a number of shorter segments to reduce the transmission time needed on the medium in order to reduce losses due to interference.

On reception the segments have to be reassembled, and once a complete Ethernet frame has been received it is passed on to the Ethernet Emulation Layer.

### Ethernet Emulation

The protocol stack is defined to provide an Ethernet compatible service to higher layers in the system. In this way compatibility is maintained with standard Ethernet bridging or IP routing functions providing data services at the primary or secondary stations. The Ethernet Emulation Layer provides a mapping service between the Ethernet address used on the interface to the higher layers of the system and the physical station address used for data transfer over the medium. Each primary and secondary station protocol stack therefore has its own Ethernet address which is globally unique.

The primary station also dynamically builds a table of all Ethernet addresses that can be reached via each secondary station under its control in order to provide correct routing of Ethernet frames. The Ethernet Emulation Layer is also responsible for ensuring the correct handling of broadcast Ethernet frames.

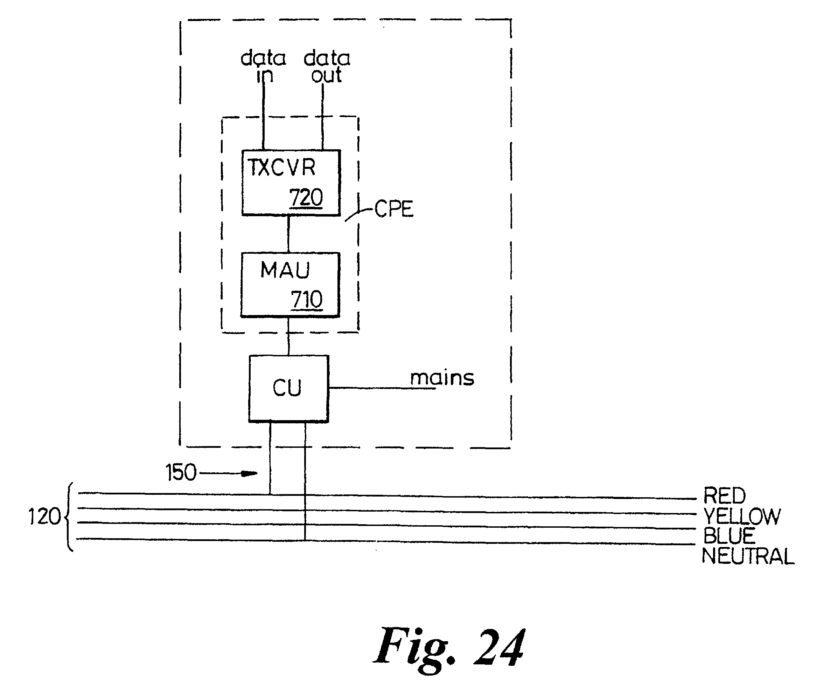

Figure 24 shows a typical installation at a residence which subscribes to the data service. Branch cable 150 represents a conventional mains branch cable which couples to one of the three phase lines in distribution cable 120. Coupling unit CU 151 couples communications signals to and from cable 150, allowing the mains supply to pass. The coupling unit can comprise a box which is wired in to the mains cabling at the subscriber premises or a fuse unit which replaces the existing fuse unit in the subscriber premises meter cabinet. Medium adapter unit 710 may include one or more amplifiers to adjust the level of signals in the upstream (transmit) and downstream (receive) directions. Transceiver 720 receives data packets and converts them into an output data stream for coupling to equipment in the subscriber's home such as a personal computer which is accessing the Internet or a home-banking service. The transceiver also converts an incoming data stream into data packets which are transmitted to the base station.

Two embodiments of subscriber-end equipment CPE will now be described. The first embodiment as shown in figure 19 uses a card which fits into a slot of a PC. Communications signals from the mains coupling unit are carried over a coaxial cable to the card, which carries an FSK modem and packet data controller. The packet controller assembles and disassembles data packets, converting them to/from a data stream, and also manages transmission of those packets in the power line transmission protocol. The interface between the card and the rest of the PC is via a 16 bit AT bus. Power for the card is provided by the host PC's power supply.

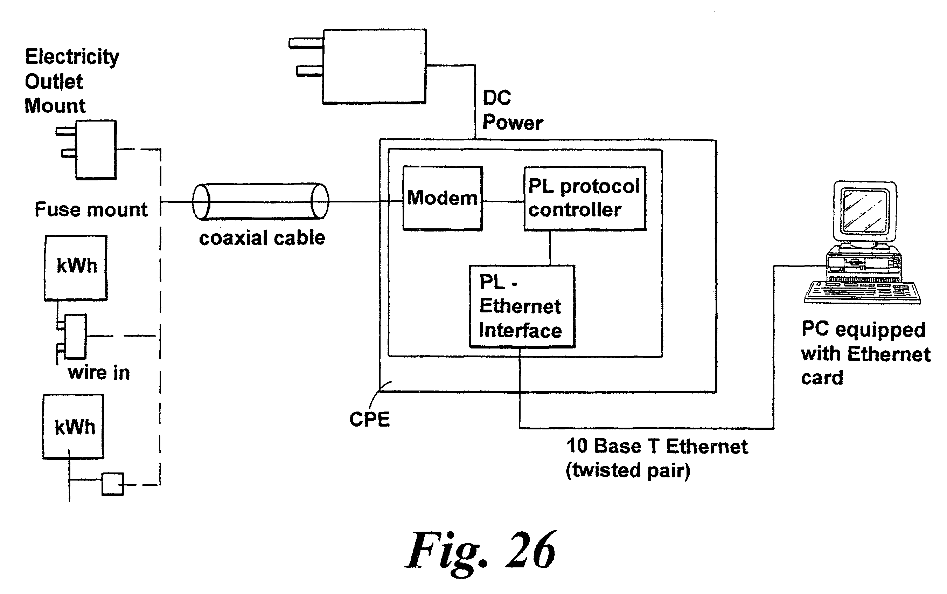

The second embodiment is a stand-alone unit, as shown in figure 26. As with the PC card embodiment, communications signals from the mains coupling unit are carried over a coaxial cable to the unit. The unit has an FSK modem, a packet data controller (power line protocol) and a converter for converting the data between the power line protocol format to an Ethernet format for outputting to a data terminal. Ethernet is a widely used transmission protocol for which computer cards are readily available. A user makes use of an existing Ethernet card in their PC, or a card that they buy. A power supply for the unit is derived via a mains adapter.

Incorporated within the receiver equipment are one or more amplifiers to adjust the level of signals in the upstream (transmit) and downstream (receive) directions.

The CPE is essentially a transparent Bridge between:
- the PL protocol (transmitted over the LV network) between the CPE and Base station, and
- the Ethernet protocol used to communicate between the CPE and the end-user computer.

The CPE is a free-standing unit, powered from the customer premises mains supply. The CPE has two main interfaces:
- a 10BaseT Ethernet connection over unshielded twisted pair (UTP) cables, to the end-user's computer, and
- a PL protocol connection over coaxial cable to the PL Coupling Unit. Connection of the RF signal from the CPE to the LV Coupling Unit is via a coaxial cable, terminated by a suitable connector such as a BNC connector.

Other forms of Ethernet, other than 10BaseT, or other protocols can be used for the link to the end-user's computer.

The network termination point (the responsibility interface) is at the CPE Ethernet port or equivalent end-user interface port.

The CPE need not be located close to the customer's computer. The use of UTP cable is intended to ease installation within the customer premises, compared to coaxial cable.

The CPE is powered externally from a mains supply. The CPE is intended to be left powered up continuously, i.e. it does not need to be turned on and off at the same time as the computer.

An external plug-top power supply can be used with voltage regulation circuitry within the CPE. The CPE is housed within a plastic enclosure.

One or more indicator LEDs may be provided to indicate the following:
- Power on.
- Power line interface activity.
- Ethernet interface activity.

The CPU can be an 80x86-compatible PC architecture, i.e. the CPE is based around an embedded 80x86 processor. An 80386 equivalent (or more powerful) processor is best to support the functionality of the CPE.

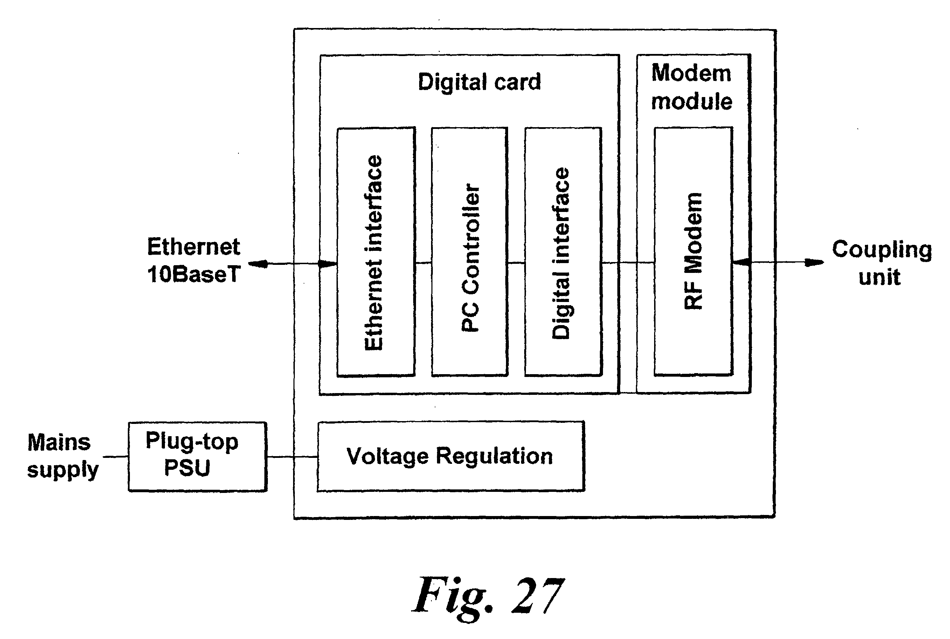

As shown in the physical configuration diagram of figure 27, the CPE can be formed with a modem module and a digital card.
The main features of the digital card are:
- 80386 core compatible embedded processor;
- Memory units
- 10BaseT Ethernet port.
- RF Modem connection port.
- HDLC Universal Serial Controller.

An ISA port can be provided for future expansion. The HDLC USC provides the interface to the RF Modem.

### Software

The CPE software provides an IP bridge function between the power line (PL) protocol and Ethernet (or other protocol for the link between the CPE and data terminal.)

Also, the CPE software, which runs on the processor, comprises:
- A stable, industry standard operating system such as LINUX;
- Power line to Ethernet (USB or similar) bridging;
- routing functionality for multiple station users;
- management functionality.

This initial software configuration can be upgraded by downloadable software (for upgrades, new functions and optimisation).

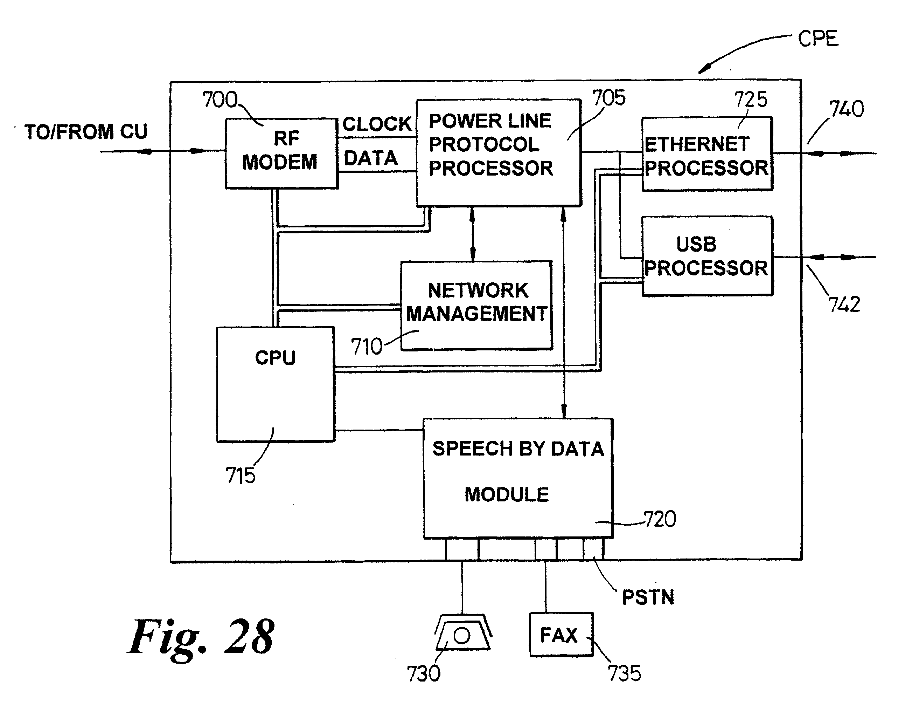

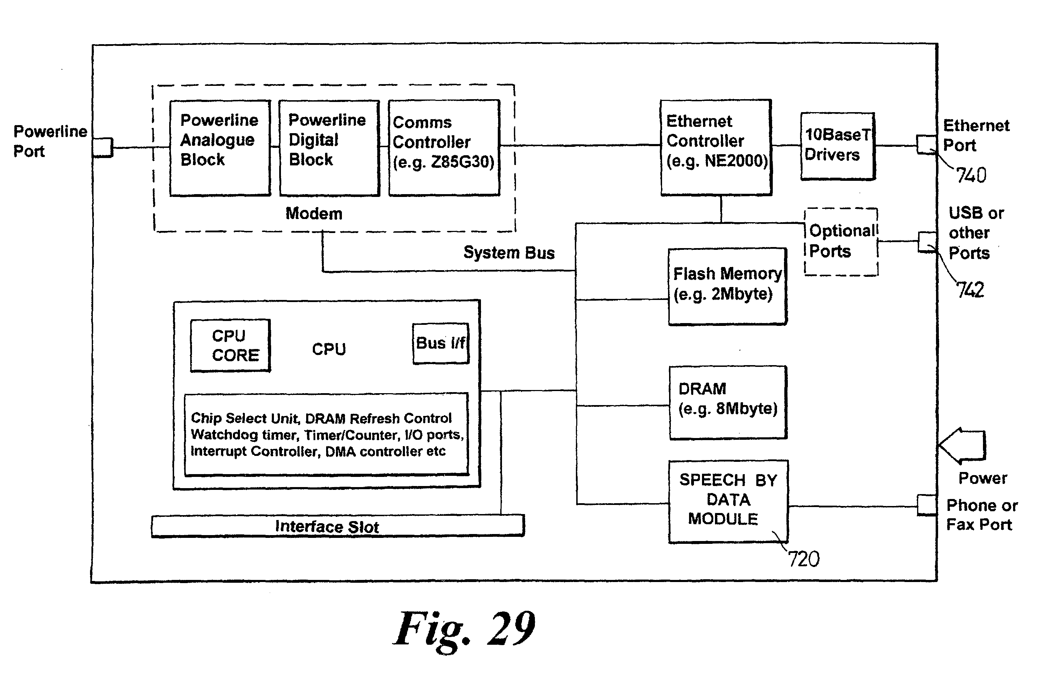

Figures 28 and 29 show the functional blocks of the CPE in more detail. Communications signals, in a packet data format, are transmitted/received in RF form by RF modem 700. The modem converts the signals between radio frequency (typically 2-5MHz) and base band. The modem also amplifies and detects the signals. The modem includes a transmit line driver, a receive buffer and a modulator and a receiver that, preferably, can operate at a range of different bit rates and frequencies.

The output of the modem is fed to a power line protocol processor 705 which assembles/disassembles data packets and also manages transmission of those packets across the power line in response to polling commands from the base station BS. The CPE transmits/receives data to/from data equipment via an Ethernet port 740. The data is processed by a data processor, such as an Ethernet processor 725. Other ports 742 can also be provided for transmitting/receiving data in other formats, such as Universal Serial Bus (USB). Bridging between the power line and Ethernet data formats is implemented in software by CPU 715.

A network management unit 710 receives network management messages from the power line network for controlling operation of the CPE. The unit may receive software updates over the communications network.

A central processor unit CPU 715 controls operation of the unit and may be a 80386 or similar processor. Speech by data module 720 connects to the power line protocol processor 705 and CPU and also connects to external speech-band equipment including telephone 730, fax machine 735 and an external telephone line PSTN. While only one of each type of equipment is shown, there may be several. The CPE has suitable ports, such as RJ45 connectors, to allow connections to the telephone, fax and PSTN line.

The speech by data module performs the tasks of:
- interfacing to the external equipment and providing the features that a telephone and fax machine would normally expect, such as ringing tone when there is an incoming call, dial tone when the receiver is lifted, and a power supply;
- signalling conversion between conventional telephone signalling (DTMF) and a digital form which can be conveyed over the power line data packets;
- coding/decoding of speech signals, including D/A, A/D conversion and any other digital coding that is required.

One of the problems with receiving data communications over a power line, rather than a conventional local area network, is that there is a high level of noise present on the line along with the data. A known way of operating a receiver which is coupled to a noisy medium is to gate the data according to the received signal strength indication (RSSI). The RSSI is usually derived from the data decoding signal path, such as from a limiting amplifier. This is unsuitable for use when receiving signals which contain a high level of noise.

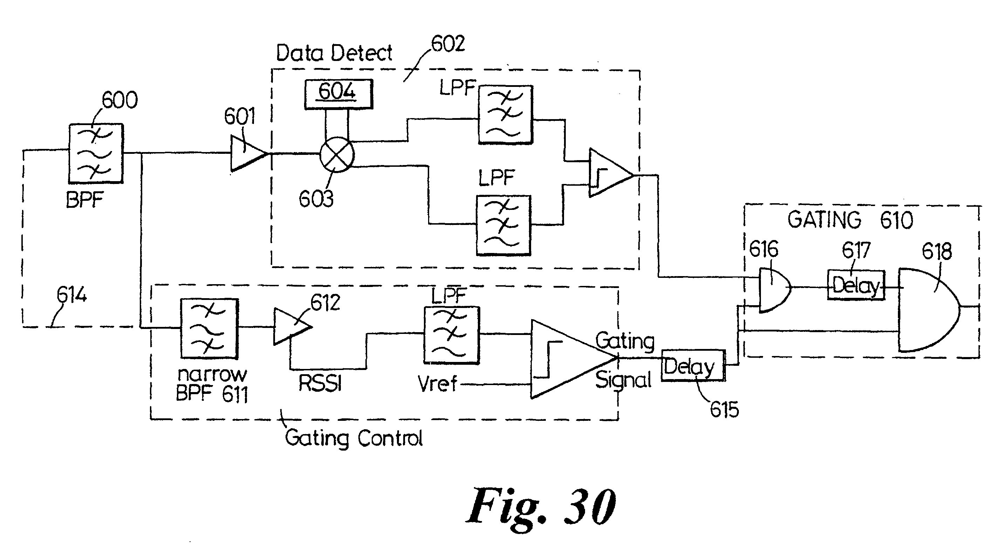

Figure 30 shows a receiver design for use at the base station or at a subscriber station. A communications signal enters from the power line coupling unit and is passed through a band-pass filter 600 which is centred on the frequency components used by the data signal. This filter has a maximally-flat characteristic i.e. a linear phase response. This filter minimises further inter symbol interference (ISI) in the received signal above that already caused by transmission over the power line while attenuating frequencies outside those used for data transmission. ISI is an effect which limits the maximum bit rate of the communications system. The band-pass filtered signal is passed through a limiting amplifier 601 and a data detector block 602. This comprises a quadrature discriminator 603 with a tuned resonator 604 which performs a frequency-to-voltage conversion of the received signal. The two outputs of the discriminator are low-pass filtered and fed to a comparator to derive a data signal. The data signal is applied to a gating block.

The derivation of the gating signal will now be described. A portion of the band-pass filtered signal is applied to a second band-pass filter 611 which has a very narrow frequency response. The filter's response is chosen so as to be centred about the frequency f2, which is present in every transmitted data bit/symbol. Using a narrow band-pass filter allows a gating signal to be accurately generated and minimises false activation due to noise. The filtered signal is applied to a limiting amplifier 612 which produces an output signal representative of received signal strength. The RSSI is low-pass filtered and applied to a comparator where it is compared with a reference voltage Vref representative of an expected RSSI. The low-pass filter has a response which filters out noise impulses of <5µS in length and thereby prevents false activation. As an alternative to taking a portion of the first band-pass filter's output for feeding to the second band-pass filter, it is possible to feed the second band-pass filter with a portion of the received signal directly from the mains coupling unit, shown by line 614.

The gate control signal is delayed 615 and then 'AND'ed 616 with the data signal. The delayed gated data is delayed 617 before being 'AND'ed 618 with the gating signal.

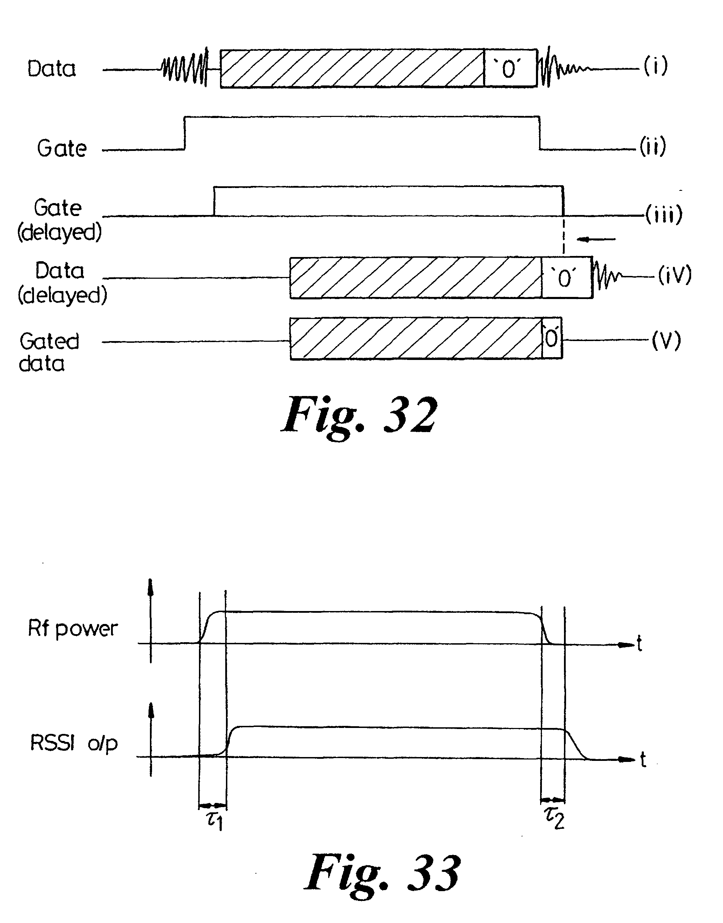

As shown in figures 32 and 33, a received data signal comprises an initial burst, during which RF power ramps up, a data packet (the wanted portion of the signal) and a tail burst during which RF power decays. Deriving a gating signal which is proportional to RSSI, and which incorporates some delay due to the low-pass filtering, results in the gating signal turning on with some lag τ₁ and turning off with a different time lag τ₂ dependent upon the RF power level. This results in the data signal being gated 'off' during the noisy trail portion.

This problem is addressed by adding a period of redundant data (binary '0's) to the end of each data packet and delaying the received data signal with respect to the gating signal such that the data signal is gated 'off' during the period occupied by the redundant data.

Figure 33 illustrates the operation of the receiver. Line (i) shows the signal received over the power line, having an initial RF ramping period, a period during which the data is sent, a period of redundant '0' data, and an RF ramp-down period.
Line (ii) shows the gating signal, which turns on during the initial ramping period and turns off during the ramp-down period. The gate signal is delayed (line (iii)) such that it turns on after the RF ramping period. The preliminarily gated data is then delayed (line (iv)) such that the gate signal turns off during the period occupied by the redundant data (line (v)). A packet decoding function in the receiver removes the redundant Os from the end of the packet.

An alternative to adding redundant data to the end of a packet is to add an end of transmission flag to the packet so that the packet decoder can recognise the end of a data packet and disregard any "data" which follows it.

The following description relates to a method of timing the transmission of data packets to take advantage of the noise level on the power line. This can be combined with the other aspects of the system as described above.

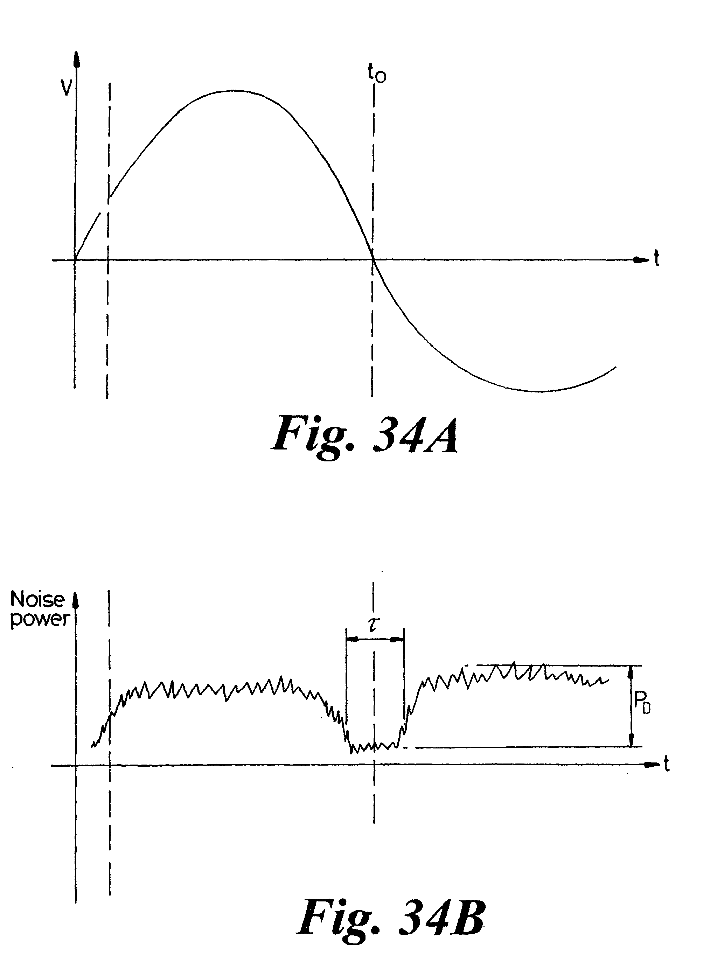

Figure 34A is a plot of a typical mains waveform carried on one of the phase lines, showing voltage against time. Figure 34B is a plot of one example of noise power against time occurring during the corresponding time interval. Noise power is not constant, but varies with time. It has been found that the noise power on the line varies according to the voltage of the mains signal. There are periods τ when noise power is significantly reduced on the line, and at such times the reduction in noise power P_{D} can be of the order of 20dB. It has been found that much of the noise is caused by sparking across contacts. Sparking is an effect which is dependent upon voltage, and which is significantly reduced below certain voltages. Thermostats, switches and electric motors are examples of equipment which generate this form of noise. Different types of electrical equipment will each have its own characteristic threshold levels below which sparking tends not to occur, and the noise power on a line will be the summation of the individual sources of noise contributed by all equipment coupled to the network. Also, thyristor-controlled dimmer switches and gas discharge lighting are known to generate impulsive noise at certain times during the AC voltage cycle.

With an alternating mains signal, there can be regular periodic time periods τ during which noise power is at a minimum level. These quiet periods extend each side of the points at which the mains voltage crosses the zero level, shown as tₒ in fig. 34A. These points will be referred to hereinafter as zero-crossing points. The periodic nature of these quiet periods allows the time of future periods to be predicted based on the timing of previously detected periods. For a 50Hz a.c. signal zero-crossings will occur at 10ms intervals. The shape of the noise envelope can vary depending on the equipment coupled to the network at a particular time. In figure 34B the noise power envelope has a frequency of 100Hz, i.e. twice the mains frequency. Under other conditions, such as when the noise is dependent upon the polarity of the mains signal, the noise power envelope can have a frequency equal to the mains frequency. Under other conditions the noise envelope can have some other frequency.

Data packets have a duration which is equal to, or slightly shorter than, the quiet period and are transmitted so as to fit within the quiet period.

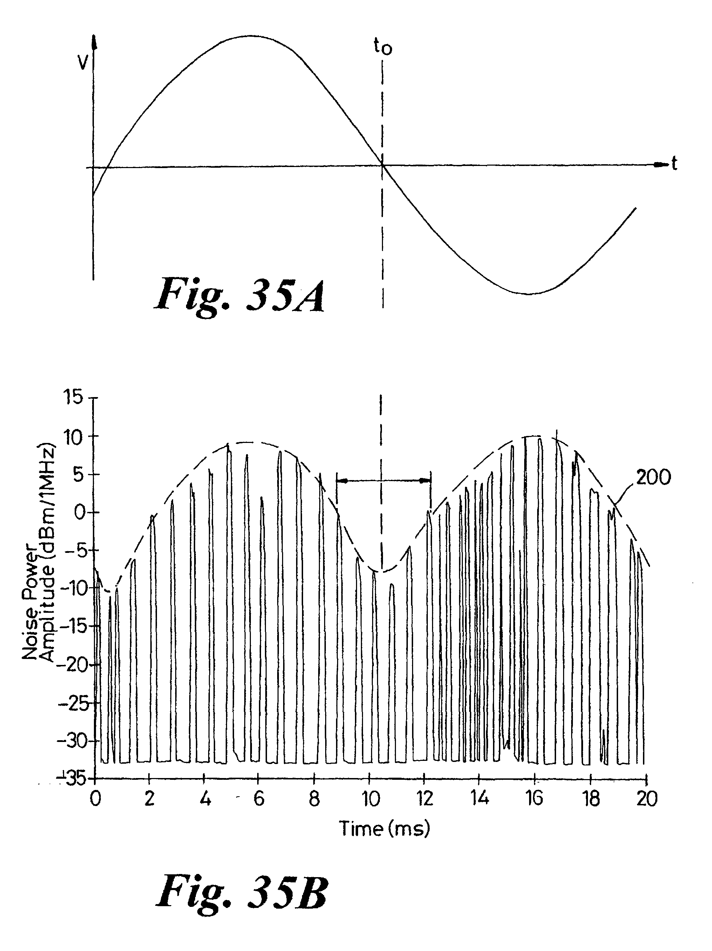

Under some conditions the quiet period does not have sharply-defined boundaries at which the noise level abruptly changes, but instead the noise level progressively increases each side of the mains zero-crossing point as shown by envelope 200 in fig. 35B. This graph is an actual plot of noise generated by a faulty thermostat. There are still advantages in transmitting data during the quietest portion of the noise envelope. Where there are three phase lines, each carrying a power signal which is offset in phase with respect to the others, it is preferred to transmit data on a particular phase line during the quietest third of the period of the power signal, as shown in fig. 34B. With a mains frequency of 50Hz and a noise envelope which has a frequency of 100Hz this corresponds to two quiet periods each lasting 3.3ms during one AC voltage cycle.

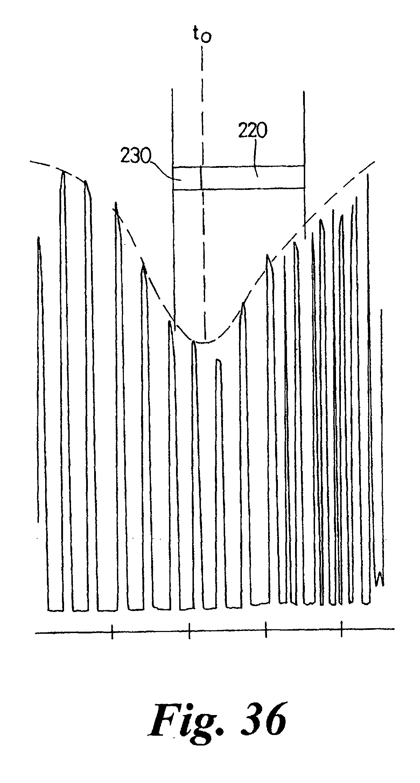

A data packet can be transmitted such that it is symmetrical about the zero-crossing point of the mains signal, or it can be transmitted such that it is asymmetrical about the zero-crossing point. Asymmetrical transmission has a particular use where access to the network is controlled by a token-passing protocol. In a token-passing protocol it is particularly important that the token that is carried by data packets is not corrupted or lost. The token usually comprises a special bit pattern carried in an access burst and an address of the subscriber station to which the packet is destined. By timing the transmission of data packets such that the portion of the packet that includes the token corresponds to a time when noise is close to its minimum level, the risk of losing the token can be minimised. For example, where the token is transmitted at the beginning of a packet, the packet can be timed such that the majority of the packet is transmitted after the zero-crossing point such that the token is transmitted during the time at which noise is close to its minimum level. Fig. 36 shows an example of transmitting a data packet 220 asymmetrically about the zero crossing-point tₒ, such that token 230 is transmitted at a time at which the noise power is at its minimum level.

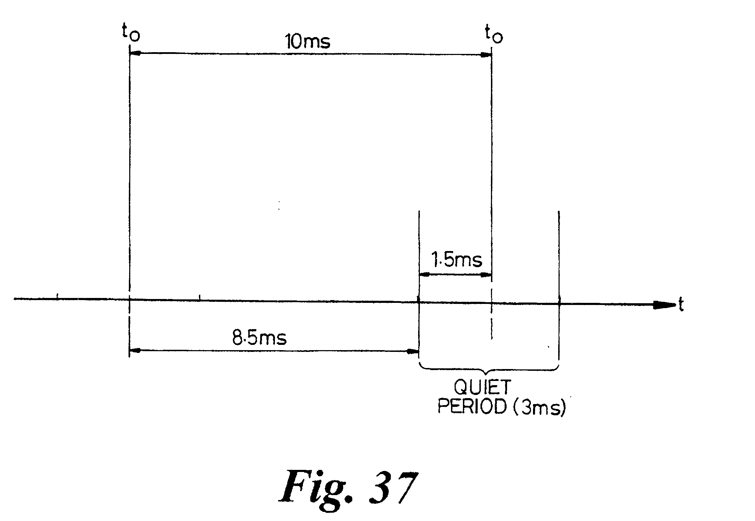

Where quiet periods are known to be located about a characteristic feature of the power signal, such as the zero-crossing points, it is convenient to determine when quiet periods occur by monitoring for the occurrence of zero-crossing points. Zero crossing points can be detected by using a voltage comparator which continually compares the line voltage with a reference value of zero volts. Where the quiet period extends each side of the zero-crossing point and it is desired to make full use of the quiet period, it is necessary to predict when future zero-crossings will occur, and from that predicted time and the knowledge of the quiet window duration, to predict the time when the future quiet window will start. This is described with reference to figure 37. A 50Hz mains signal has zero-crossings tₒ occurring every 10ms. Assuming that a quiet window lasts for 3ms, divided equally about the zero-crossing point, it can be seen that a quiet window begins 1.5ms before each zero-crossing point, or 8.5ms after a zero-crossing point. Therefore, by detecting a zero-crossing point tₒ and waiting for 8.5ms, a data packet can be transmitted at the beginning of the next quiet period.

It is possible to measure actual noise level on the line and to use this measurement to vary the length of the quiet window. The measurements of noise power can be analysed by techniques such as looking for excursions above particular threshold levels of noise power.

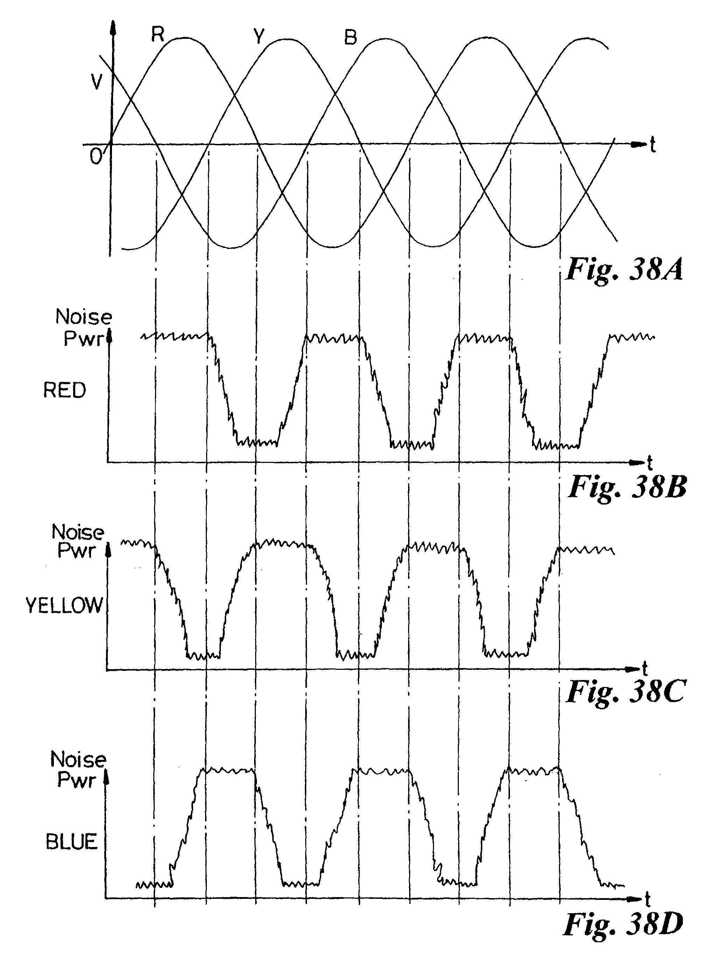

Figure 38A is a plot of voltage against time for the power signals carried on the three phase lines Red, Yellow, Blue. The power signal on each phase line is spaced apart by 120°. Figures 38B, 38C, 38D respectively depict a plot of typical noise power against time for the Red, Yellow and Blue phase lines for the corresponding time interval. Quiet periods on the different phase lines are offset from one another in time by 120°, corresponding to the occurrence of the zero-crossing points on the lines. It can be seen that quiet periods successively occur on each phase line; in the example shown in figs 38B-38D the sequence of quiet periods is blue, yellow, red, blue, yellow, red. Advantage can be taken of the quiet periods by successively transmitting over each of the phase lines in synchronism with the quiet periods.

One of the characteristics of an electrical distribution cable is that at radio frequencies (RF) the capacitance which exists between different phase lines in the cable causes signals which originate on one phase line to leak onto a neighbouring phase line. Referring to figures 38B and 38C, this effect will cause some of the noise power on yellow phase line to leak into the red phase line. The extent to which this occurs depends on frequency of the bearer used for transmission and on the particular structure of cable. Even with this leakage, the quiet period on a line still offers a significantly reduced noise level. It is also noted that while noise sources at short range from a receiver cause interference levels at the highest power, the coupling between phase lines is relatively weak at short ranges.

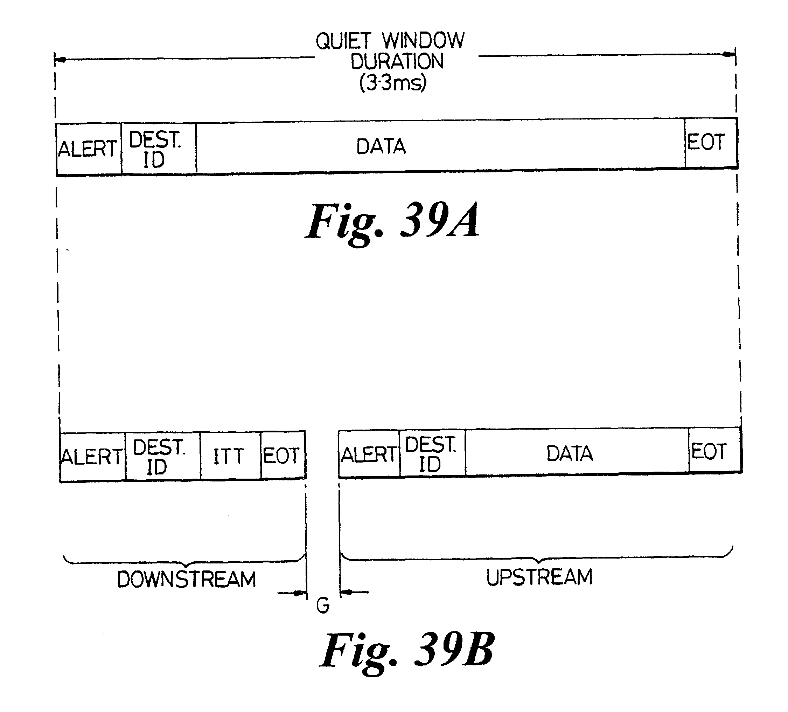

Figure 39A shows one example of the structure of a data packet. The duration of the packet is shown as 3.3ms, to correspond to a quiet period duration of 3.3ms as discussed above, but it can have a different duration. The packet comprises an alert burst (ALERT) which includes a special bit pattern, known by subscriber stations, an address of a subscriber station to which the packet is detined (DEST. ID), a data payload (DATA) and an end-of-transmission flag (EOT).

So far the idea of transmitting during quiet periods has been described without reference to the upstream or downstream directions of transmission, as it is equally applicable to both. However, given that a data system is usually asymmetrical in the sense that downstream traffic is much greater than upstream traffic, it is economical to include the processing equipment at the base station for use with downstream transmissions. Fig. 39B shows a way in which a downstream packet from a base station to a particular subscriber station and an upstream packet from that subscriber station to the base station can be sent one after the other within a quiet period. The downstream packet is sent at the beginning of the quiet period and includes an alert burst (ALERT), address of the subscriber station (DEST. ID), an invitation-to-transmit flag (ITT) and an end-of-transmission flag (EOT). After a short guard space (G) the subscriber station responds with an upstream transmission comprising comprises an alert burst (ALERT), address of the base station (DEST. ID), a data payload (DATA) and an end-of-transmission flag (EOT).

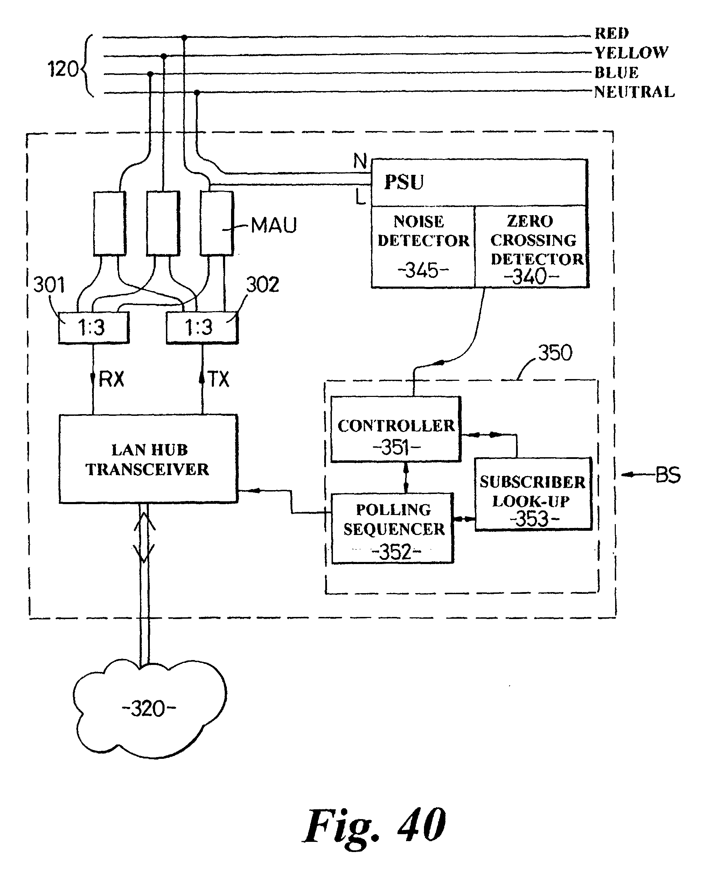

Figure 40 shows one embodiment of the base station BS of figure 1 in more detail. A branch is taken from each of the phase lines (Red, Yellow, Blue) and the neutral line. Each phase line is coupled to a medium adapter unit MAU which comprises a high-pass filter to pass signals in the band used for communications and to block the flow of mains electricity at 50Hz or 60Hz. Each MAU also includes amplifiers for individually adjusting the level of an upstream signal received from cable 120 and a downstream signal prior to transmission over cable 120. A combiner 301 combines a received signal from each MAU for applying to LAN Hub transceiver, and a splitter 302 splits a signal output by the LAN hub transceiver three ways to apply a portion to each MAU for transmission over each phase line.

LAN hub transceiver routes data packets to the telecommunications network. The transceiver couples to external transmission network 320 and transports telecommunications signals to and from network 320.

Blocks 340 and 350 comprise the main equipment which is required for implementing transmission during quiet periods.

It is possible to monitor each phase individually by tapping each of the phase lines, such as by tapping at the point just before the MAU. However, knowledge of the offset between each phase line (120°) allows a single phase line to be monitored and other quiet periods to be calculated from that. A convenient way of monitoring a single phase line is by incorporating a zero crossing detector 340 into the base station power supply unit PSU, which derives a single phase supply from the distribution cable.

An output from detector 340 is fed to controller 351. The controller calculates the time when future quiet periods will occur on each of the phase lines, based on the known periodic nature of the a.c. signal and the known relationship between the phase lines. Updates from detector 340 on times when zero crossings actually occur allows the controller to maintain accurate predictions.

In addition to, or instead of zero-crossing detector 340, a noise detector 345 can be provided to monitor actual noise on the line and provide information to controller 351 for use in changing timing of quiet periods. Noise detector 345 in combination with controller 351 can be arranged to analyse the monitored noise on the line to detect a periodic noise pattern and to predict future quiet periods based on the identified pattern.

Polling sequencer 352 co-ordinates the order in which data subscribers on the network are polled, with reference to subscriber look-up table 353. The look-up table is a memory with a list of each data subscriber and the phase line to which they are coupled.

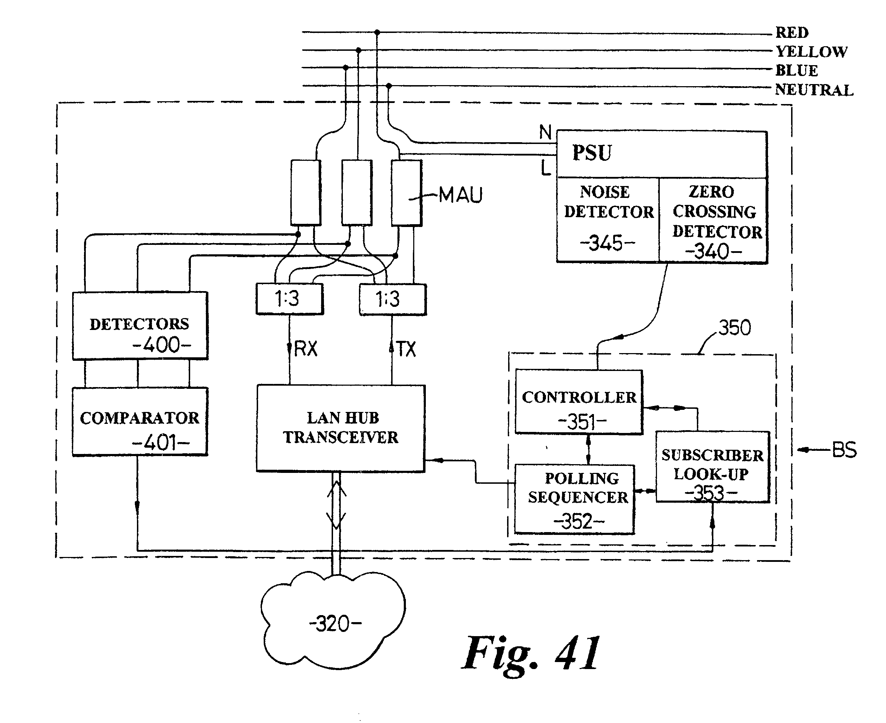

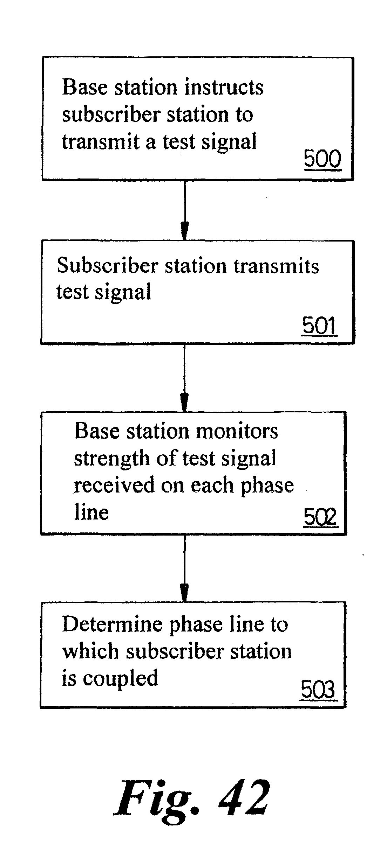

Two ways of compiling the list in look-up table 353 are as follows:
(i) Manual Entry. An engineer checks (from plans of the network or an inspection of a subscriber's installation) which phase a new subscriber for the data service is connected to and adds this information to look-up table 353. The update can be made by an engineer visiting the base station or by a down-loading operation from a remote terminal.
(ii) Power Sensing. The modifications required to the base station to implement this are shown in figure 41, and the method by which the base station selects the optimum phase line is shown in the flow-diagram of figure 42. At step 500 the base station transmits a signal requesting that a particular subscriber station transmits a test signal. The subscriber station responds, at step 501, by transmitting a test signal. A bank of power detectors 400, one detector per phase line, are coupled to the outputs of the MAUs at the base station. At step 502 a comparator 401 compares the outputs of the detectors during reception of a test signal from a new subscriber. At step 503 the base station determines, from the detector outputs, which phase line provides the strongest signal and hence to which phase line the subscriber is coupled. This is entered, under the control of controller 351, into look-up table 353. A measurement other than signal strength can be used in determining the best phase line that a subscriber is coupled to; e.g. quantities such as bit error rate (BER) can be used. For this method to be used reliably, and correctly identify the line to which a subscriber is coupled, the test signal should be at the lower end of the frequency range used for transmission. This is because coupling between the phase lines generally decreases with transmission frequency.

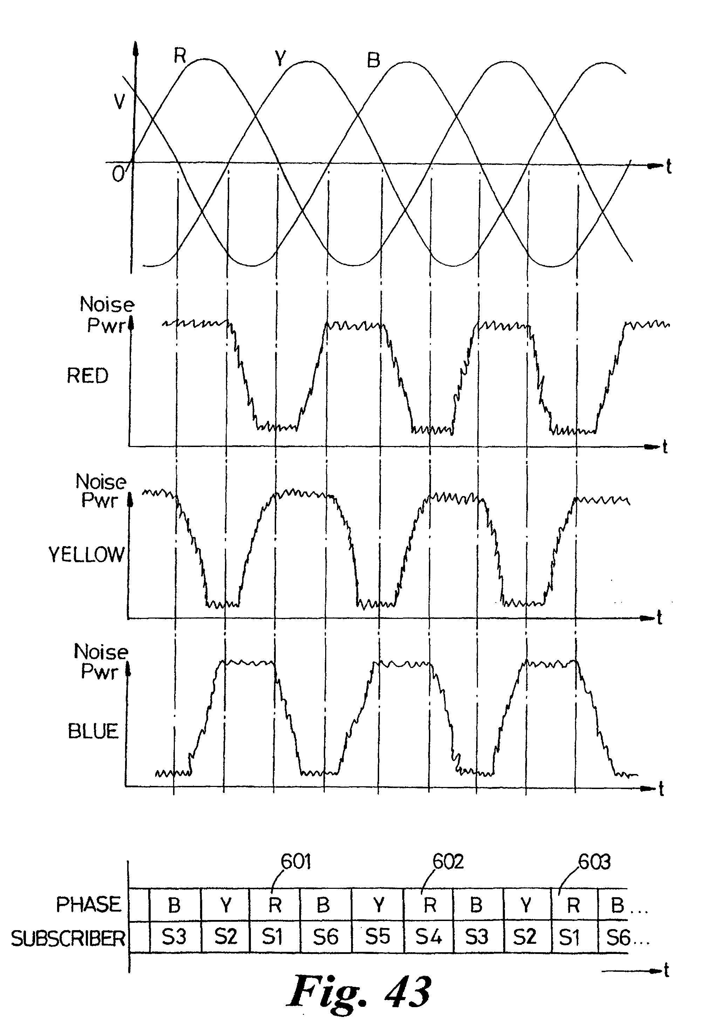

The operation of the polling sequencer will now be described in more detail. The polling sequencer adapts the manner in which data subscribers are polled according to demand from the users. Some scenarios will now be considered.
1.) High demand, equally divided between data subscribers on each phase.
   - sequencer allocates timeslots preferentially to subscribers during quiet periods on the phase line to which they are connected. Figure 43 illustrates how six subscribers S1-S6, coupled in the manner shown in figure 1, are polled. Subscribers S1 and S4 are coupled to the red phase line. During the quiet periods on red 601, 602, 603 subscribers S1 and S4 are polled, by transmitting data packets which are addressed to these subscribers. Quiet periods are shared among the subscribers on that phase. In this example alternate quiet periods on the red line are allocated to a particular subscriber, e.g. subscriber S1 is allocated slots 601 and 603.
2.) Low demand - equally divided between data subscribers on each phase.
   - sequencer allocates timeslots preferentially to subscribers during quiet periods on the phase line to which they are connected, as in case (1).
3.) High demand - unequally divided between the phases.
   - sequencer preferentially allocates timeslots to correspond with quiet periods on the phase line to which subscribers are connected, but also allocates non-optimum slots.

An example will illustrate this technique. Consider demand from two data subscribers: S1 on red phase, S2 on yellow phase and no demand from subscribers on blue. A possible polling sequence is:

| | | | | | | | |
|---|---|---|---|---|---|---|---|
| Window on: | R | Y | B | R | Y | B | ... |
| Subscriber: | S1 | S2 | S1 | S1 | S2 | S2 | ... |

Subscribers S1 (Red) and S2 (Yellow) are allocated quiet periods on the phase line to which they are connected and, in addition, the non-optimum periods on the blue phase line are alternately allocated to S1 and S2.

## Claims

1. A method of processing a received data signal at a power line communications receiver comprising:
- filtering the received data signal through a band-pass filter centred on the frequency band used by the data signal and having a response which minimises inter-symbol interference in the data signal;
- filtering the received data signal through a narrow-band filter centred on the frequency band used by the data signal and deriving a RSSI signal; and,
- gating the filtered data signal according to the RSSI signal.

2. A method according to claim 1 wherein the data signal comprises a frequency-shift keyed signal and wherein the narrow-band filter is centred on one of the FSK frequencies.

3. A method according to claim 2 wherein the data signal is coded such that each data symbol contains a burst at the FSK frequency upon which the narrow band filter is centred.

4. A method according to claim 1 wherein the band-pass filter is a maximally-flat filter.

5. A method according to claim 1 wherein redundant data is appended to the end of a data packet and the method further comprises delaying the received data signal with respect to the RSSI signal such that the gate turns off during the period occupied by the redundant data.

6. A method of transmitting data over a power line communications system comprising:
- forming a data packet having a portion of user data and a tail portion of redundant data;
- transmitting the data packet over the power line;
- receiving the data packet at a receiver of the system;
- deriving a RSSI signal from the received signal;
- delaying the received data signal with respect to the RSSI signal; and,
- gating the delayed received data according to the RSSI signal whereby the gate turns off during the period occupied by the redundant data.

## Patentansprüche

1. Verfahren zur Verarbeitung eines empfangenen Signals an einem Netzleitungs-Kommunikationsempfänger, wobei das Verfahren folgendes umfaßt:
- Filtern des empfangenen Datensignals durch ein Bandpaßfilter, das auf dem Frequenzband zentriert ist, das von dem Datensignal verwendet wird, und das ein Ansprechverhalten hat, das Zwischenzeichenstörungen in dem Datensignal zu einem Minimum macht,
- Filtern des empfangenen Datensignals durch ein Schmalbandfilter, das auf dem Frequenzband zentriert ist, das von dem Datensignal verwendet wird, und Ableiten eines RSSI- (Empfangssignalstärke-Anzeige-) Signals, und
- Torsteuem des gefilterten Datensignals entsprechend dem RSSI-Signal.

2. Verfahren nach Anspruch 1, bei dem das Datensignal ein frequenzumgetastetes Signal umfaßt, und bei dem das Schmalbandfilter auf einer der FSK-Frequenzen zentriert ist.

3. Verfahren nach Anspruch 2, bei dem das Datensignal derart codiert ist, daß jedes Datensymbol einen Burst bei der FSK-Frequenz enthält, auf die das Schmalbandfilter zentriert ist.

4. Verfahren nach Anspruch 1, bei dem das Bandpaßfilter ein maximal flaches Filter (BUTTERWORTH-Filter) ist.

5. Verfahren nach Anspruch 1, bei dem redundante Daten an das Ende eines Datenpaketes angehängt werden und das Verfahren weiterhin die Verzögerung des empfangenen Datensignals gegenüber dem RSSI-Signal derart umfaßt, daß das Torsteuersignal während der Periode abschaltet, die von den redundanten Daten belegt ist.

6. Verfahren zur Übertragung von Daten über ein Netzleitungs-Kommunikationssystem, mit den folgenden Schritten:
- Bilden eines Datenpaketes, das einen Abschnitt mit Benutzerdaten und einen Endabschnitt mit redundanten Daten aufweist,
- Übertragen des Datenpaketes über die Netzleitung;
- Empfangen des Datenpaketes an einen Empfänger des Systems;
- Ableiten eines RSSI-Signals aus dem empfangenen Signal;
- Verzögern des empfangenen Datensignals bezüglich des RSSI-Signals, und
- Torsteuern der verzögerten empfangenen Daten entsprechend dem RSSI-Signal, wodurch die Torsteuerung während der Periode abgeschaltet wird, die von den redundanten Daten belegt ist.

## Revendications

1. Procédé de traitement d'un signal de données reçu au niveau d'un récepteur de communications de ligne d'alimentation en énergie comportant les étapes consistant à :
- filtrer le signal de données reçu à travers un filtre passe-bande centré sur la bande de fréquences utilisée par le signal de données et ayant une réponse qui minimise l'interférence inter-symbole dans le signal de données,
- filtrer le signal de données reçu à travers un filtre à bande étroite centré sur la bande de fréquences utilisée par le signal de données et dériver un signal RSSI, et
- déclencher le signal de données filtré conformément au signal RSSI.

2. Procédé selon la revendication 1, dans lequel le signal de données comporte un signal ayant subi une modulation par déplacement de fréquence et dans lequel le filtre à bande étroite est centré sur l'une des fréquences FSK.

3. Procédé selon la revendication 2, dans lequel le signal de données est codé de sorte que chaque symbole de données contient une salve à la fréquence FSK sur laquelle est centré le filtre à bande étroite.

4. Procédé selon la revendication 1, dans lequel le filtre passe-bande est un filtre à réponse plate d'une manière maximale.

5. Procédé selon la revendication 1, dans lequel des données redondantes sont annexées à la fin d'un paquet de données et le procédé comporte en outre l'étape consistant à retarder le signal de données reçu par rapport au signal RSSI de sorte que le déclenchement s'interrompt durant la période occupée par les données redondantes.

6. Procédé de transmission de données via un système de communications de ligne d'alimentation en énergie comportant les étapes consistant à :
- former un paquet de données ayant une partie de données d'utilisateur et une partie de fin de données redondantes,
- transmettre le paquet de données sur la ligne d'alimentation en énergie,
- recevoir le paquet de données au niveau d'un récepteur du système,
- dériver un signal RSSI à partir du signal reçu,
- retarder le signal de données reçu par rapport au signal RSSI, et
- déclencher les données reçues retardées conformément au signal RSSI par lequel le déclenchement s'interrompt durant la période occupée par les données redondantes.
